# EUROPEAN PATENT APPLICATION

(11) **EP 4 675 883 A1**
(43) Date of publication of application: **07.01.2026**
(21) Application number: 24905132.7
(22) Date of filing: 15.05.2024
(51) Int. Cl.: H02J 7/00, B60L 53/00

(54) **CHARGING APPARATUS, CHARGING PILE AND CHARGING AND STORAGE SYSTEM**

(71) Applicant: Contemporary Amperex Technology Co., Limited, Jiaocheng District Ningde Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/093513
(87) International publication number: WO 2025/236219

(57) **Abstract**

This application discloses a charging apparatus, a charging pile, and a charging and storage system. The charging apparatus includes: an energy storage module, where the energy storage module includes one or more energy storage units, each of the energy storage units has a first positive power supply terminal and a first negative power supply terminal, the one or more energy storage units are connected to a second positive power supply terminal and a second negative power supply terminal of the energy storage module via the first positive power supply terminal(s) and the first negative power supply terminal(s), and the energy storage module is configured to provide a first direct current; and a charging module, where the charging module is connected to the second positive power supply terminal and the second negative power supply terminal of the energy storage module, and the charging module is configured to be adapted to provide charging output based on the first direct current; where maximum charging output power of the charging module is greater than or equal to 350 kilowatts, and/or rated charging output power of the charging module is greater than or equal to 290 kilowatts. In this way, configuring the energy storage unit inside the charging apparatus not only can achieve high-power charging such as super charging/fast charging, but also can reduce the costs.

## Description

### TECHNICAL FIELD

This application relates to the field of charging technologies, and specifically to a charging apparatus, a charging pile, and a charging and storage system.

### BACKGROUND

Currently, fast-charging/super-charging piles are rarely used, but with the popularization of fast-charging/supercharging electric vehicles, a large number of fast-charging/super-charging piles are urgently needed.

However, in related art, fast-charging/super-charging piles all require additional transformers or transformer capacity expansion, which is not conducive to the rapid connection of fast-charging/super-charging piles and increases costs.

### SUMMARY

In view of the preceding problems, this application provides a charging apparatus, a charging pile, and a charging and storage system. Without the need for additional transformers or transformer capacity expansion, energy storage units are configured inside the charging apparatus. This not only can enable the rapid charge of the charging apparatus, such as fast charging/super charging, but also can reduce the costs associated with adding new transformers or expanding transformer capacity.

According to a first aspect, this application provide a charging apparatus, including: an energy storage module, where the energy storage module includes one or more energy storage units, each of the energy storage units has a first positive power supply terminal and a first negative power supply terminal, the one or more energy storage units are connected to a second positive power supply terminal and a second negative power supply terminal of the energy storage module via the first positive power supply terminal(s) and the first negative power supply terminal(s), and the energy storage module is configured to provide a first direct current; and a charging module, where the charging module is connected to the second positive power supply terminal and the second negative power supply terminal of the energy storage module, and the charging module is configured to be adapted to provide charging output based on the first direct current; where maximum charging output power of the charging module is greater than or equal to 350 kilowatts, and/or rated charging output power of the charging module is greater than or equal to 290 kilowatts.

In the technical solution of embodiments of this application, without the need for additional transformers or transformer capacity expansion, the energy storage units are configured inside the charging apparatus. This not only can enable the rapid charge of the charging apparatus, such as fast charging/super charging, but also can reduce the costs associated with adding new transformers or expanding transformer capacity.

In some embodiments, the charging apparatus further includes an input module, where the input module is adapted to provide charging energy for each of the energy storage units. In this way, the energy storage units can be charged.

In some embodiments, maximum output power of the input module is less than or equal to 150 kilowatts, and/or rated output power of the input module is less than or equal to 125 kilowatts. In this way, the charging apparatus can also achieve high-power charging under low-power input.

In some embodiments, a ratio of the maximum charging output power of the charging module to the maximum output power of the input module is greater than 1 and less than or equal to 15, and/or a ratio of the rated charging output power of the charging module to the rated output power of the input module is greater than 1 and less than or equal to 15. In this way, the charging apparatus can also achieve high-power charging under low-power input.

In some embodiments, each of the energy storage units includes a battery sub-unit, where a ratio of the rated output power of the input module to rated energy of the battery sub-unit is greater than or equal to 1/n1, n1 ranging from 1 to 4. In this way, the cost performance can be improved.

In some embodiments, each of the energy storage units includes a battery sub-unit, where a ratio of rated energy of the battery sub-unit to the rated charging output power of the charging module is greater than or equal to 1/(n2×n3), n2 ranging from 94% to 99%, and n3 ranging from 4 to 6. In this way, the cost performance can be improved.

In some embodiments, each of the energy storage units includes a battery sub-unit, where a ratio of rated energy of the battery sub-unit to rated power of the battery sub-unit is less than or equal to 1/3, and/or a volumetric energy density of the battery sub-unit is greater than or equal to 380 watt-hours per liter. In this way, the cost performance can be improved.

In some embodiments, the one or more energy storage units are connected in series and/or parallel between the second positive power supply terminal and the second negative power supply terminal of the energy storage module via the first positive power supply terminal(s) and the first negative power supply terminal(s) to provide the first direct current. In this way, the energy storage units can be freely connected.

In some embodiments, each of the energy storage units includes a battery sub-unit, and each of the energy storage units is configured to provide a second direct current based on the electric energy of the battery sub-unit.

In some embodiments, each of at least some of the one or more energy storage units further includes a first power conversion sub-unit, where the first power conversion sub-unit is connected to a corresponding battery sub-unit and a first positive power supply terminal and a first negative power supply terminal of a corresponding energy storage unit, and is configured to convert the electric energy of the battery sub-unit into the second direct current; and under the condition that the energy storage unit does not include the first power conversion sub-unit, the battery sub-unit is directly connected to the first positive power supply terminal and the first negative power supply terminal of the corresponding energy storage unit to provide the second direct current. In this way, the flexibility of charging can be improved.

In some embodiments, each of at least some of the one or more energy storage units further includes a first switch sub-unit, where the first switch sub-unit is connected to a corresponding battery sub-unit and a first positive power supply terminal and a first negative power supply terminal of a corresponding energy storage unit, and is configured to connect the corresponding battery sub-unit to the first positive power supply terminal and the first negative power supply terminal of the corresponding energy storage unit under the condition of being in an on-state, to provide the second direct current; and under the condition that the energy storage unit does not include the first switch sub-unit, the battery sub-unit is directly connected to the first positive power supply terminal and the first negative power supply terminal of the corresponding energy storage unit to provide the second direct current. In this way, the energy storage units can be protected.

In some embodiments, each of at least some of the one or more energy storage units further includes a first power conversion sub-unit and a first switch sub-unit, where the first power conversion sub-unit and the first switch sub-unit are connected in series between a corresponding battery sub-unit and a first positive power supply terminal and a first negative power supply terminal of a corresponding energy storage unit, and the first power conversion sub-unit is configured to convert the electric energy of the battery sub-unit into the second direct current under the condition that a corresponding first switch sub-unit is in an on-state; and under the condition that the energy storage unit does not include the first power conversion sub-unit and the first switch sub-unit, the battery sub-unit is directly connected to the first positive power supply terminal and the first negative power supply terminal of the corresponding energy storage unit to provide the second direct current. In this way, the flexibility of charging can be improved and the energy storage units can be protected.

In some embodiments, the first power conversion sub-unit is a bidirectional DCDC sub-unit. In this way, the charging and discharging of the battery sub-unit can be realized.

In some embodiments, the input module includes an input interface, where the input interface is connected to the second positive power supply terminal and the second negative power supply terminal of the energy storage module, and is configured to provide charging energy for each of the energy storage units based on a third direct current provided by a first external power supply; or the input module includes a second power conversion sub-unit, where the second power conversion sub-unit is connected to the second positive power supply terminal and the second negative power supply terminal of the energy storage module, and is configured to provide charging energy for each of the energy storage units based on a first alternating current provided by a second external power supply. In this way, alternating current input or direct current input can be allowed to charge the energy storage units.

In some embodiments, the second power conversion sub-unit is a bidirectional ACDC sub-unit. In this way, a bidirectional flow of energy can be achieved.

In some embodiments, the charging module includes a third power conversion sub-unit and a charging gun, where a positive input terminal and a negative input terminal of the third power conversion sub-unit are correspondingly connected to the second positive power supply terminal and the second negative power supply terminal of the energy storage module, a positive output terminal and a negative output terminal of the third power conversion sub-unit are correspondingly connected to a positive input terminal and a negative input terminal of the charging gun, and the third power conversion sub-unit is configured to convert the first direct current into a fourth direct current for charging output through the charging gun. In this way, the negative input terminal of the charging gun is not shared.

In some embodiments, the third power conversion sub-unit is a bipolar bidirectional DCDC sub-unit. In this way, a bidirectional flow of energy can be achieved.

In some embodiments, the charging module includes a fourth power conversion sub-unit and a charging gun, where a positive input terminal of the fourth power conversion sub-unit is connected to the second positive power supply terminal of the energy storage module, a positive output terminal of the fourth power conversion sub-unit is connected to a positive input terminal of the charging gun, a negative input terminal of the charging gun is connected to the second negative power supply terminal of the energy storage module, and the fourth power conversion sub-unit is configured to convert the first direct current into a fourth direct current for charging output through the charging gun. In this way, the negative input terminal of the charging gun is shared, which can reduce the costs.

In some embodiments, the fourth power conversion sub-unit is a unipolar bidirectional DCDC sub-unit. In this way, a bidirectional flow of energy can be achieved.

In some embodiments, the energy storage module further includes a selection unit, where the selection unit is connected to the one or more energy storage units, and is configured to select at least one energy storage unit from the one or more energy storage units to be connected to the second positive power supply terminal and the second negative power supply terminal of the energy storage module to provide the first direct current. In this way, the flexibility of charging can be improved.

In some embodiments, the energy storage module includes one second positive power supply terminal and one second negative power supply terminal, the selection unit includes a plurality of second switch sub-units, each of the second switch sub-units is connected to one energy storage unit, each of the second switch sub-units is connected in series between a first positive power supply terminal of a corresponding energy storage unit and the second positive power supply terminal of the energy storage module, the first negative power supply terminal(s) of the one or more energy storage units is(are) connected to the second negative power supply terminal of the energy storage module, and the second switch sub-unit is configured to connect the first positive power supply terminal of the corresponding energy storage unit to the second positive power supply terminal of the energy storage module under the condition of being in an on-state.

In some embodiments, the charging module includes a fifth power conversion sub-unit and a charging gun, where a positive input terminal and a negative input terminal of the fifth power conversion sub-unit are correspondingly connected to the second positive power supply terminal and the second negative power supply terminal of the energy storage module, a positive output terminal and a negative output terminal of the fifth power conversion sub-unit are correspondingly connected to a positive input terminal and a negative input terminal of the charging gun, and the fifth power conversion sub-unit is configured to convert the first direct current into a fourth direct current for charging output through the charging gun. In this way, the negative input terminal of the charging gun is not shared.

In some embodiments, the fifth power conversion sub-unit is a bipolar bidirectional DCDC sub-unit. In this way, a bidirectional flow of energy can be achieved.

In some embodiments, the charging module includes a sixth power conversion sub-unit and a charging gun, where a positive input terminal of the sixth power conversion sub-unit is connected to the second positive power supply terminal of the energy storage module, a positive output terminal of the sixth power conversion sub-unit is connected to a positive input terminal of the charging gun, a negative input terminal of the charging gun is connected to the second negative power supply terminal of the energy storage module, and the sixth power conversion sub-unit is configured to convert the first direct current into a fourth direct current for charging output through the charging gun. In this way, the negative input terminal of the charging gun is shared, which can reduce the costs.

In some embodiments, the sixth power conversion sub-unit is a unipolar bidirectional DCDC sub-unit. In this way, a bidirectional flow of energy can be achieved.

In some embodiments, the energy storage module includes a plurality of second positive power supply terminals, the energy storage module includes one second negative power supply terminal, the selection unit includes a plurality of second switch sub-units, each of the second switch sub-units is connected to one energy storage unit and one second positive power supply terminal, each of the second switch sub-units is connected in series between a first positive power supply terminal of a corresponding energy storage unit and a corresponding second positive power supply terminal, the first negative power supply terminal(s) of the one or more energy storage units is(are) connected to the second negative power supply terminal of the energy storage module, and the second switch sub-unit is configured to connect the first positive power supply terminal of the corresponding energy storage unit to the corresponding second positive power supply terminal under the condition of being in an on-state.

In some embodiments, the charging module includes a plurality of seventh power conversion sub-units and a charging gun, where a positive input terminal and a negative input terminal of each of the seventh power conversion sub-units are correspondingly connected to one second positive power supply terminals and the second negative power supply terminal, a positive output terminal and a negative output terminal of each of the seventh power conversion sub-units are correspondingly connected to a positive input terminal and a negative input terminal of the charging gun, and the plurality of seventh power conversion sub-units are configured to convert the first direct current into a fourth direct current for charging output through the charging gun. In this way, the negative input terminal of the charging gun is not shared.

In some embodiments, the seventh power conversion sub-unit is a bipolar bidirectional DCDC sub-unit. In this way, a bidirectional flow of energy can be achieved.

In some embodiments, the charging module includes a plurality of eighth power conversion sub-units and a charging gun, where a positive input terminal of each of the eighth power conversion sub-units is connected to the second positive power supply terminal, a positive output terminal of each of the eighth power conversion sub-units is connected to a positive input terminal of the charging gun, a negative input terminal of the charging gun is connected to the second negative power supply terminal of the energy storage module, and the plurality of eighth power conversion sub-units are configured to convert the first direct current into a fourth direct current for charging output through the charging gun. In this way, the negative input terminal of the charging gun is shared, which can reduce the costs.

In some embodiments, the eighth power conversion sub-unit is a unipolar bidirectional DCDC sub-unit. In this way, a bidirectional flow of energy can be achieved.

In some embodiments, the input module includes a ninth power conversion sub-unit, where the ninth power conversion sub-unit is connected to the one or more energy storage units, and is configured to provide charging energy for each of the energy storage units based on a first alternating current provided by a second external power supply. In this way, the energy storage units can be charged through one power conversion sub-unit.

In some embodiments, the second external power supply is a triphase alternating current power supply, and the ninth power conversion sub-unit is a bidirectional triphase ACDC sub-unit. In this way, a triphase power supply can be connected through three energy storage units and one power conversion sub-unit.

In some embodiments, the input module includes a plurality of tenth power conversion sub-units, each of the tenth power conversion sub-units is connected to one energy storage unit, and the plurality of tenth power conversion sub-units are configured to provide charging energy for each of the energy storage units based on a first alternating current provided by a second external power supply. In this way, the energy storage units can be charged through a plurality of power conversion sub-units.

In some embodiments, the second external power supply is a triphase alternating current power supply, the number of the tenth power conversion sub-units is three, and each of the tenth power conversion sub-units is a bidirectional uniphase ACDC sub-unit. In this way, a triphase power supply can be connected through three energy storage units and three power conversion sub-units.

In some embodiments, the charging apparatus further includes a wireless communication module, where at least some of the energy storage module, the input module, and the charging module are connected to the wireless communication module to perform information exchange with an external device through the wireless communication module.

According to a second aspect, this application provides a charging pile, including the foregoing charging apparatus.

According to a third aspect, this application provides a charging and storage system, including the foregoing charging apparatus.

In some embodiments, the charging apparatus is provided in plurality, and the plurality of charging apparatuses share one direct-current bus or alternating-current bus.

In some embodiments, under the condition that the plurality of charging apparatuses share one direct-current bus and the input module of the charging apparatus includes an input interface, the system further includes: a first transformer, where a primary winding of the first transformer is connected to an alternating-current power grid, and is configured to convert a second alternating current provided by the alternating-current power grid into a first alternating current; and a first AC-DC conversion module, and the first AC-DC conversion module is connected to a secondary winding of the first transformer and the direct-current bus, and is configured to convert the first alternating current into a third direct current; where the second positive power supply terminals and the second negative power supply terminals of the energy storage modules in the plurality of charging apparatuses are all connected to the direct-current bus. In this way, the plurality of charging apparatuses share one direct-current bus.

In some embodiments, under the condition that the plurality of charging apparatuses share one direct-current bus and the input module of the charging apparatus includes a second power conversion sub-unit, the system further includes: a first transformer, where a primary winding of the first transformer is connected to an alternating-current power grid, the second power conversion sub-unit is connected to a secondary winding of the first transformer and the direct-current bus, and the first transformer is configured to convert a second alternating current provided by the alternating-current power grid into a first alternating current; where the second positive power supply terminals and the second negative power supply terminals of the energy storage modules in the plurality of charging apparatuses are all connected to the direct-current bus. In this way, the plurality of charging apparatuses share one direct-current bus.

In some embodiments, under the condition that the plurality of charging apparatuses share one alternating-current bus and the input module of the charging apparatus includes a ninth power conversion sub-unit or a plurality of tenth power conversion sub-units, the system further includes: a second transformer, where a primary winding of the second transformer is connected to an alternating-current power grid, and a secondary winding of the second transformer is connected to the alternating-current bus, and is configured to convert a second alternating current provided by the alternating-current power grid into a first alternating current; where the ninth power conversion sub-units or the plurality of tenth power conversion sub-units in the input modules of the plurality of charging apparatuses are all connected to the alternating-current bus. In this way, the plurality of charging apparatuses share one alternating-current bus.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same components are denoted by same reference signs. In the accompanying drawings:
FIG. 1 is a schematic structural diagram of a charging apparatus with energy storage units connected in series according to an embodiment of this application.
FIG. 2 is a schematic structural diagram of a charging apparatus with an input module according to an embodiment of this application.
FIG. 3 is a schematic structural diagram of a charging apparatus with energy storage units connected in parallel according to an embodiment of this application.
FIG. 4a is a schematic structural diagram of a charging apparatus with energy storage units that include battery sub-units according to an embodiment of this application.
FIG. 4b is a schematic structural diagram of a charging apparatus with energy storage units that include battery sub-units and first power conversion sub-units according to an embodiment of this application.
FIG. 4c is a schematic structural diagram of a charging apparatus with energy storage units that include battery sub-units and first switch sub-units according to an embodiment of this application.
FIG. 4d is a schematic structural diagram of a charging apparatus with energy storage units that include battery sub-units, first power conversion sub-units, and first switch sub-units according to an embodiment of this application.
FIG. 5a is a schematic structural diagram of a charging apparatus with an input module that includes an input interface according to an embodiment of this application.
FIG. 5b is a schematic structural diagram of a charging apparatus with an input module that includes a second power conversion sub-unit according to an embodiment of this application.
FIG. 6a is a schematic structural diagram of a charging apparatus with a charging gun whose negative input terminal is not shared according to an embodiment of this application.
FIG. 6b is a schematic structural diagram of a charging apparatus with a charging gun whose negative input terminal is shared according to an embodiment of this application.
FIG. 7 is a schematic structural diagram of a charging apparatus with a selection unit according to an embodiment of this application.
FIG. 8 is a schematic structural diagram of a charging apparatus with a second positive power supply terminal as shown in FIG. 7.
FIG. 9a is a schematic structural diagram of a charging apparatus with a second positive power supply terminal and a charging gun whose negative input terminal is not shared as shown in FIG. 8.
FIG. 9b is a schematic structural diagram of a charging apparatus with a second positive power supply terminal and a charging gun whose negative input terminal is shared as shown in FIG. 8.
FIG. 10 is a schematic structural diagram of a charging apparatus with a plurality of second positive power supply terminals as shown in FIG. 7.
FIG. 11a is a schematic structural diagram of a charging apparatus with a plurality of second positive power supply terminals and a charging gun whose negative input terminal is not shared as shown in FIG. 10.
FIG. 11b is a schematic structural diagram of a charging apparatus with a plurality of second positive power supply terminals and a charging gun whose negative input terminal is shared as shown in FIG. 10.
FIG. 12a is a schematic structural diagram of a charging apparatus with a selection unit and an input module that includes a ninth power conversion sub-unit as shown in FIG. 7.
FIG. 12b is a schematic structural diagram of a charging apparatus with a selection unit and an input module that includes a plurality of tenth power conversion sub-units as shown in FIG. 7.
FIG. 13 is a schematic structural diagram of a charging apparatus with a wireless communication module according to an embodiment of this application.
FIG. 14 is a schematic structural diagram of a charging apparatus with energy storage units connected in series, with each energy storage unit including a bidirectional DCDC sub-unit, and a charging gun whose negative input terminal is not shared according to an embodiment of this application.
FIG. 15 is a schematic structural diagram of a charging apparatus with energy storage units connected in series, with each energy storage unit including a bidirectional DCDC sub-unit, and a charging gun whose negative input terminal is shared according to an embodiment of this application.
FIG. 16 is a schematic structural diagram of a charging apparatus with energy storage units connected in parallel, with each energy storage unit including a bidirectional DCDC sub-unit, and a charging gun whose negative input terminal is not shared according to an embodiment of this application.
FIG. 17 is a schematic structural diagram of a charging apparatus with energy storage units connected in parallel, with each energy storage unit including a bidirectional DCDC sub-unit, and a charging gun whose negative input terminal is shared according to an embodiment of this application.
FIG. 18 is a schematic structural diagram of a charging apparatus with energy storage units connected in series, with each of some energy storage units including a bidirectional DCDC sub-unit, and a charging gun whose negative input terminal is not shared according to an embodiment of this application.
FIG. 19 is a schematic structural diagram of a charging apparatus with energy storage units connected in series, with each of some energy storage units including a bidirectional DCDC sub-unit, and a charging gun whose negative input terminal is shared according to an embodiment of this application.
FIG. 20 is a schematic structural diagram of a charging apparatus with energy storage units connected in parallel, with each energy storage unit including a first switch sub-unit, and a charging gun whose negative input terminal is not shared according to an embodiment of this application.
FIG. 21 is a schematic structural diagram of a charging apparatus with energy storage units and bidirectional ACDC sub-units forming a triphase power supply and a charging gun whose negative input terminal is not shared according to an embodiment of this application.
FIG. 22 is a schematic structural diagram of a charging apparatus with energy storage units and bidirectional ACDC sub-units forming a triphase power supply and a charging gun whose negative input terminal is shared according to an embodiment of this application.
FIG. 23 is a schematic structural diagram of a charging pile according to an embodiment of this application.
FIG. 24 is a schematic structural diagram of a charging and storage system according to an embodiment of this application.
FIG. 25 is a schematic structural diagram of a charging and storage system with a plurality of charging apparatuses sharing a direct-current bus according to an embodiment of this application.
FIG. 26 is a schematic structural diagram of a charging and storage system with a plurality of charging apparatuses sharing a direct-current bus according to another embodiment of this application.
FIG. 27 is a schematic structural diagram of a charging and storage system with a plurality of charging apparatuses sharing an alternating-current bus according to an embodiment of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include/comprise" and "have" and any other variations thereof in the specification, claims, and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, fast-charging/super-charging piles are rarely used, but with the popularization of fast-charging/supercharging electric vehicles, a large number of fast-charging/super-charging piles are urgently needed.

However, in related art, fast-charging/super-charging piles all require additional transformers or transformer capacity expansion, which is not conducive to the rapid connection of fast-charging/super-charging piles and increases costs. For example, an input terminal of a transformer is connected to an alternating-current power grid, and an output terminal of the transformer is connected to a charging pile. Under the condition that the charging pile is a fast-charging/super-charging pile, it is necessary to expand the transformer capacity or add a new transformer between the existing transformer and the fast-charging/super-charging pile. However, since transformer expansion or addition is required, it is not conducive to the rapid connection of fast-charging/super-charging piles and increases the costs.

Based on this, this application provides a charging apparatus. Without the need for additional transformers or transformer capacity expansion, energy storage units are configured inside the charging apparatus. This not only can enable the rapid charge of the charging apparatus, such as fast charging/super charging, but also can reduce the costs associated with adding new transformers or expanding transformer capacity.

The charging apparatus disclosed in the embodiments of this application may be used to charge electric vehicles, electric ships, electric tools, and other devices that require fast charging/super charging, and may also be used to charge electric vehicles, electric ships, electric tools, and other devices that do not require fast charging/super charging. In other words, the charging apparatus disclosed in the embodiments of this application can realize both high-power charging and low-power charging of electrical equipment, and has a wide range of applications.

The following describes the charging apparatus of this application in conjunction with specific embodiments.

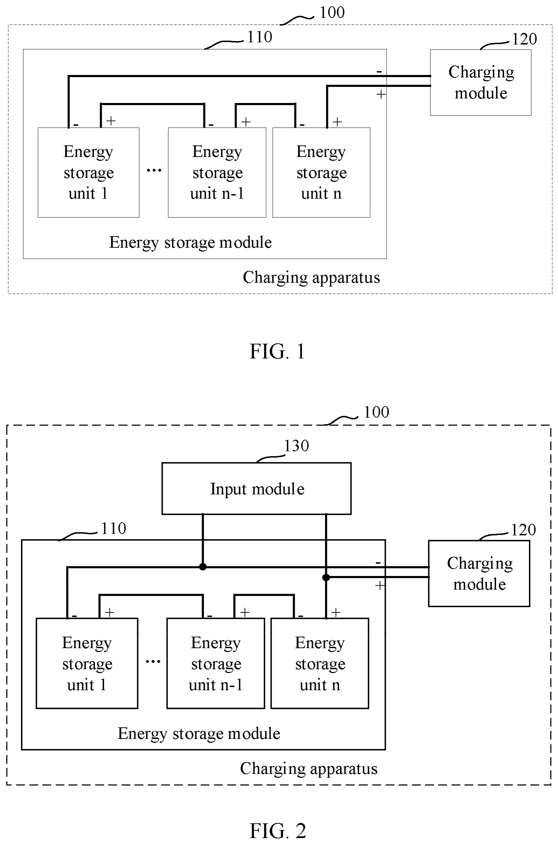

FIG. 1 is a schematic structural diagram of a charging apparatus 100 according to an embodiment of this application.

Refer to FIG. 1, the charging apparatus 100 may include an energy storage module 110 and a charging module 120.

The energy storage module 110 includes one or more energy storage units, namely, energy storage unit 1, ..., energy storage unit n-1, and energy storage unit n (where n is a positive integer). Each of the energy storage units has a first positive power supply terminal (+) and a first negative power supply terminal (-), the one or more energy storage units are connected to a second positive power supply terminal (+) and a second negative power supply terminal (-) of the energy storage module 110 via the first positive power supply terminal(s) and the first negative power supply terminal(s), and the energy storage module 110 is configured to provide a first direct current. In an example, the energy storage unit may be an electric box.

The charging module 120 is connected to the second positive power supply terminal and the second negative power supply terminal of the energy storage module 110, and the charging module 120 is configured to be adapted to provide charging output based on the first direct current, where maximum charging output power of the charging module 120 is greater than or equal to 350 kilowatts, and/or rated charging output power of the charging module 120 is greater than or equal to 290 kilowatts.

Specifically, the number of energy storage units may be selected based on actual needs. When the charging apparatus 100 is used for low-power charging only, the number of the energy storage units may be set to one or a few, which can meet the low-power charging application scenarios. When the charging apparatus 100 is used for high-power charging, the number of the energy storage units may be set to plurality, which can meet both high-power charging application scenarios and low-power charging application scenarios. For example, by adjusting the charging output power of either the energy storage units or the charging module or both the energy storage units and the charging module, high-power or low-power charging can be achieved. Due to the modularization of energy storage units, the energy storage units can be freely added or removed, enabling quick connection and high-power charging without the need to add transformers or expand transformer capacity.

When the number of the energy storage units is one, the first positive power supply terminal of the energy storage unit is connected to the second positive power supply terminal of the energy storage module 110, and the first negative power supply terminal of the energy storage unit is connected to the second negative power supply terminal of the energy storage module 110. The second positive power supply terminal and the second negative power supply terminal of the energy storage module 110 are also connected to the charging module 120. During charging, the energy storage module 110 provides the first direct current through the energy storage unit, and the charging module 120 converts the first direct current into a target direct current to charge a device to be charged. At this time, the charging apparatus 100 can meet low-power charging application scenarios. It should be noted that the relevant parameters of the energy storage unit and the charging module 120 may be set based on actual conditions, and reasonable parameter configurations can meet the charging demands.

When the number of the energy storage units are plurality, the plurality of energy storage units may be connected in series, parallel, or series-parallel, and connected to the charging module 120 through the second positive power supply terminal and the second negative power supply terminal of the energy storage module 110. For example, in FIG. 1, the energy storage unit 1, ..., energy storage unit n-1, and energy storage unit n are connected in series between the second positive power supply terminal and the second negative power supply terminal of the energy storage module 110 via their respective first positive power supply terminals and first negative power supply terminals. In addition, the second positive power supply terminal and the second negative power supply terminal of the energy storage module 110 are also connected to the charging module 120. During charging, when high-power charging is needed, the energy storage module 110 provides a first direct current through the plurality of energy storage units, where the first direct current may have high power. The charging module 120 then converts the first direct current into a target direct current to charge the device to be charged, where the target direct current has a high power, which can meet the high-power charging application scenarios. When low-power charging is needed, the first direct current may have low power, and the target direct current also has low power, which can meet low-power charging application scenarios. It should be noted that the relevant parameters of the energy storage unit and the charging module 120 may be set based on actual conditions, and reasonable parameter configurations can meet the charging demands. When the number of the energy storage units are plurality, the power of the energy storage module is the sum of the power of the plurality of energy storage units.

For example, maximum charging output power of the charging module 120 is greater than or equal to 350 kilowatts, which means that the maximum charging output power of the charging apparatus 100 is greater than or equal to 350 kilowatts. For example, by selecting an appropriate number of energy storage units, the maximum charging output power of the charging module 120 may reach 350 kilowatts, 360 kilowatts, 500 kilowatts, 800 kilowatts, 900 kilowatts, or the like. It should be noted that the charging output power herein refers to the maximum charging output power. In actual charging, it may have a downward compatibility. For example, if the maximum charging output power is 360 kilowatts, it means that the charging apparatus 100 can output a charging output power ranging from 0 to 360 kilowatts to meet different charging demands.

It can be understood that the maximum charging output power and the rated charging output power of the charging module 120 meet a certain multiple relation, for example, a multiple relation of 1.1 to 1.2. Therefore, the rated charging output power of the charging module 120 may be greater than or equal to 290 kilowatts, meaning that the rated charging output power of the charging apparatus 100 is greater than or equal to 290 kilowatts.

In actual applications, the maximum charging output power of the charging module 120 may be limited, or the rated charging output power of the charging module 120 may be limited, or both the maximum charging output power and the rated charging output power may be limited.

In the foregoing embodiment, modular energy storage units are configured inside the charging apparatus, so that the energy storage units may be freely added or removed. When high-power charging is needed, the energy storage units may be freely and quickly connected to achieve high-power charging, such as fast charging/super charging, without the need for additional transformers or transformer capacity expansion, thereby reducing the transformer costs.

In some embodiments, referring to FIG. 2, the charging apparatus 100 further includes an input module 130, where the input module 130 is adapted to provide charging energy for each of the energy storage units.

In some embodiments, maximum output power of the input module 130 is less than or equal to 150 kilowatts, and/or rated output power of the input module 130 is less than or equal to 125 kilowatts.

Specifically, the input module 130 is mainly configured to charge each of the energy storage units in the energy storage module 110, and is for low-power charging. For example, the maximum output power of the input module 130 is less than or equal to 150 kilowatts, for example, the maximum output power is 150 kilowatts, 100 kilowatts, 85 kilowatts, or the like. It should be noted that the output power herein refers to the maximum output power. In actual charging, it may have a downward compatibility. For example, if the maximum output power is 150 kilowatts, it means that the output power ranging from 0 to 150 kilowatts may be used to charge each of the energy storage units in the energy storage module 110.

In this example, the input module 130 is for low-power output, while the charging module 120 may be for high-power output. Therefore, the entire charging apparatus 100 can achieve high-power output with low-power input. For example, an input terminal of a transformer is connected to an alternating-current power grid, and an output terminal of the transformer is connected to the input module 130. When the transformer is a small-capacity transformer, the maximum output power of the input module 130 will be limited due to the limited capacity of the transformer. For instance, if the maximum output power is 150 kilowatts, low-power charging is performed for each of the energy storage units in the energy storage module 110. However, when the energy storage module 110 discharges to charge a device to be charged, high-power charging may be achieved based on a plurality of energy storage units, for example, the maximum charging output power of the charging module 120 is 360 kilowatts. In this way, high-power output can be achieved with low-power input, so that the charging apparatus can meet high-power charging demands without additional transformers or transformer capacity expansion. Those skilled in the art can understand that the power grid generally refers to a system capable of providing power. In an example, the power grid may be a municipal power supply.

It can be understood that the maximum output power and the rated output power of the input module 130 meet a certain multiple relation, such as a multiple relation of 1.1 to 1.2. Therefore, the rated output power of the input module 130 may be less than or equal to 125 kilowatts.

In actual application, the maximum output power of the input module 130 may be limited, or the rated output power may be limited, or both the maximum output power and the rated output power of the input module 130 may be limited.

In the foregoing embodiment, by configuring modular energy storage units inside the charging apparatus, high-power output can be achieved with low-power input, so that the charging apparatus can meet high-power charging demands without additional transformers or transformer capacity expansion.

In some embodiments, a ratio of the maximum charging output power of the charging module 120 to the maximum output power of the input module 130 is greater than 1 and less than or equal to 15, and/or a ratio of the rated charging output power of the charging module 120 to the rated output power of the input module 130 is greater than 1 and less than or equal to 15.

Specifically, the maximum charging output power of the charging module 120 is greater than the maximum output power of the input module 130, to be specific, the ratio of the maximum charging output power of the charging module 120 to the maximum output power of the input module 130 is greater than 1. For example, the ratio of the maximum charging output power of the charging module 120 to the maximum output power of the input module 130 may be greater than 2, greater than 2.3, greater than 3, greater than 4, greater than 8, greater than 12.5, or the like, thereby achieving high-power output with low-power input. For example, when the ratio is 12.5, it indicates that the maximum charging output power of the charging module 120 is 12.5 times the maximum output power of the input module 130. Assuming that the maximum output power of the input module 130 is 40 kilowatts, the maximum charging output power of the charging module 120 is greater than or equal to 500 kilowatts.

In addition, the ratio of the maximum charging output power of the charging module 120 to the maximum output power of the input module 130 is less than or equal to 15. For example, the ratio may be 15, 12.5, 10.3, 9, 7, or 6. For example, when the ratio is 6, it indicates that the maximum charging output power of the charging module 120 is 6 times the maximum output power of the input module 130. Assuming that the maximum output power of the input module 130 is 150 kilowatts, the maximum charging output power of the charging module 120 is less than or equal to 900 kilowatts.

It should be noted that during setting the foregoing ratios, the minimum ratio is less than or equal to the maximum ratio. For example, the ratio of the maximum charging output power of the charging module 120 to the maximum output power of the input module 130 is greater than 2 and less than or equal to 15, or greater than 1 and less than or equal to 6, or greater than 6 and less than or equal to 12.5, or the like, and is specifically set based on actual needs.

In this way, by limiting the ratio of the maximum charging output power of the charging module 120 to the maximum output power of the input module 130, high cost performance and better performance can be achieved while realizing high-power output with low-power input.

It can be understood that the maximum charging output power and the rated charging output power of the charging module 120 meet a certain multiple relation, such as a multiple relation of 1.1 to 1.2. In addition, the maximum output power and the rated output power of the input module 130 meet a certain multiple relation, such as a multiple relation of 1.1 to 1.2. Therefore, the ratio of the rated charging output power of the charging module 120 to the rated output power of the input module 130 may also be greater than 1 and less than or equal to 15.

In actual application, the ratio of the maximum charging output power of the charging module 120 to the maximum output power of the input module 130 may be limited, or the ratio of the rated charging output power of the charging module 120 to the rated output power of the input module 130 may be limited, or both the two foregoing ratios may be limited.

In the foregoing embodiment, by limiting the ratio of the maximum charging output power of the charging module to the maximum output power of the input module, and/or by limiting the ratio of the rated charging output power of the charging module to the rated output power of the input module, high cost performance and better performance can be achieved while realizing high-power output with low-power input.

In some embodiments, each of the energy storage units includes a battery sub-unit, where a ratio of the rated output power of the input module 130 to rated energy of the battery sub-unit is greater than or equal to 1/n1, n1 ranging from 1 to 4.

Specifically, the rated energy of the battery sub-unit refers to the energy capacity specified when the battery sub-unit is designed. It represents a maximum energy value that the battery sub-unit can store or output under normal working conditions, measured in kilowatt-hours. The rated output power of the input module 130 is ≥ the rated energy of the battery sub-unit/n1/100%, where n1 may be 1, 1.4, 2, 3, or 4. Such setting can improve the cost performance of the entire charging apparatus.

In some embodiments, each of the energy storage units includes a battery sub-unit, where a ratio of rated energy of the battery sub-unit to the rated charging output power of the charging module 120 is greater than or equal to 1/(n2×n3), n2 ranging from 94% to 99%, and n3 ranging from 4 to 6.

To be specific, the rated energy of the battery sub-unit is ≥ the rated charging output power of the charging module 120/(n2×n3)×100%, where n2 may be 94%, 96%, 98.5%, and 99%, and n3 may be 4, 5, 5.5, and 6. Such setting can improve the cost performance of the entire charging apparatus.

In some embodiments, each of the energy storage units includes a battery sub-unit, where a ratio of rated energy of the battery sub-unit to rated power of the battery sub-unit is less than or equal to 1/3, and/or a volumetric energy density of the battery sub-unit is greater than 380 watt-hours per liter.

That is to say, the ratio of the rated energy of the battery sub-unit to the rated power of the battery sub-unit is not greater than 1:3. For example, when the rated power of the battery sub-unit is 350 kilowatts, the rated energy of the battery sub-unit is 58 kilowatt-hours. Such setting can improve the cost performance of the entire charging apparatus.

The volumetric energy density of the battery sub-unit is greater than or equal to 380 watt-hours per liter, for example, it may be 380 watt-hours per liter, 400 watt-hours per liter, 600 watt-hours per liter, 900 watt-hours per liter, or the like. It can be understood that a higher energy density of the battery sub-unit indicates a smaller corresponding volume, which can save space and reduce construction costs while providing high-power output.

In some embodiments, each of the energy storage units includes a battery sub-unit, where a maximum discharge rate of the battery sub-unit is greater than or equal to 4C, for example, the maximum discharge rate is greater than or equal to 5C, 6C, 7C, or 8C, or the like. In this way, high-power output can be provided.

It should be noted that the foregoing parameters may be superimposed. For example, when the maximum charging output power of the charging module 120 is greater than or equal to 350 kilowatts, maximum output power of the battery sub-unit is greater than or equal to 350 kilowatts, rated power of the battery sub-unit is greater than or equal to 350 kilowatts, rated energy of the battery sub-unit is greater than or equal to 58 kilowatt-hours, the maximum discharge rate of the battery sub-unit is greater than or equal to 4C, and the maximum output power of the input module 130 may be less than or equal to 150 kilowatts.

It should be noted that the foregoing relevant parameters of the battery sub-units are also applicable to the energy storage units and/or the energy storage module in some cases. To be specific, in some cases, the foregoing parameters are applicable to the energy storage units, the energy storage module, and the battery sub-units. For example, when the energy storage unit includes only a battery sub-unit, relevant parameters of the battery sub-unit are also relevant parameters of the energy storage unit. Furthermore, when the energy storage module 110 includes one energy storage unit, the relevant parameters of the battery sub-unit are also the relevant parameters of the energy storage module 110; and so on.

It should be noted that the energy storage unit may include one or more battery sub-units, and the plurality of battery sub-units may be connected in series, parallel, or series-parallel. Each of the battery sub-units may be a single battery cell or may be formed by a plurality of single battery cells connected in series, parallel, or series-parallel. For example, the battery sub-unit may include 10 to 100 single battery cells. By combining such single battery cells, two to six battery sub-units may be obtained, and these two to six battery sub-units are connected in series and/or parallel. With these two to six battery sub-units, the power of the energy storage unit may reach 80 kilowatts to 150 kilowatts. For example, 80 kilowatts may be achieved by combining two single battery cells; for another example, 150 kilowatts may be achieved by combining 100 single battery cells; for still another example, 90 kilowatts may be achieved by combining 80 single battery cells; and so on.

In the foregoing embodiment, by limiting the ratio relations among the rated energy and rated power of the battery sub-units, the rated output power of the input module, and the rated charging output power of the charging module, the entire charging apparatus can achieve high cost performance.

In some embodiments, the one or more energy storage units are connected in series and/or parallel between the second positive power supply terminal and the second negative power supply terminal of the energy storage module 110 via the first positive power supply terminal(s) and the first negative power supply terminal(s) to provide the first direct current.

Specifically, when the energy storage unit is provided in one, the first positive power supply terminal of the energy storage unit is connected to the second positive power supply terminal of the energy storage module 110, and the first negative power supply terminal of the energy storage unit is connected to the second negative power supply terminal of the energy storage module 110 to provide the first direct current through the energy storage unit.

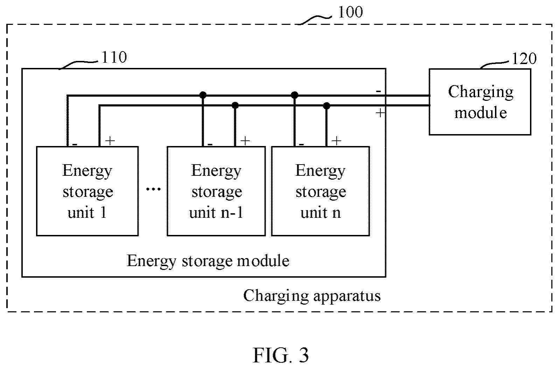

When the energy storage unit is provided in plurality, the plurality of energy storage units may be connected in series, parallel, or series-parallel. For example, referring to FIG. 1, the plurality of energy storage units are connected in series between the second positive power supply terminal and the second negative power supply terminal of the energy storage module 110 via their respective first positive power supply terminals and first negative power supply terminals; for another example, referring to FIG. 3, the plurality of energy storage units are connected in parallel between the second positive power supply terminal and the second negative power supply terminal of the energy storage module 110 via their respective first positive power supply terminals and first negative power supply terminals; and for another example, the plurality of energy storage units may be connected in series first and then in parallel, or may be connected in parallel first and then in series between the second positive power supply terminal and the second negative power supply terminal of the energy storage module 110. After the plurality of energy storage units are connected in series, parallel, or series-parallel to provide the first direct current, a specific connection method may be selected based on actual conditions.

In the foregoing embodiment, the plurality of energy storage units may be connected series, parallel, or series-parallel, so that free connection of the energy storage units can be achieved to meet different charging power demands.

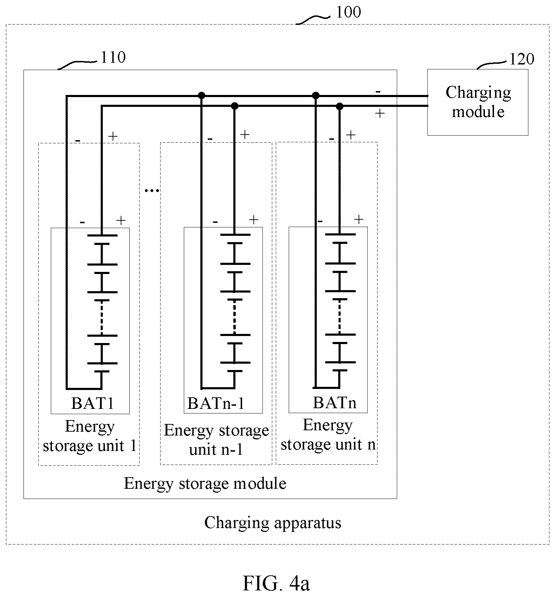

In some embodiments, referring to FIGs. 4a to 4d, each of the energy storage units includes a battery sub-unit, and each of the energy storage units is configured to provide a second direct current based on the electric energy of the battery sub-unit.

For example, referring to FIG. 4a, energy storage unit 1 includes battery sub-unit BAT1, ..., energy storage unit n-1 includes battery sub-unit BATn-1, and energy storage unit n includes battery sub-unit BATn. Each of the energy storage units provides the second direct current based on the electric energy of the battery sub-unit, and the plurality of energy storage units after connection in series and/or parallel provide the first direct current to the charging module 120.

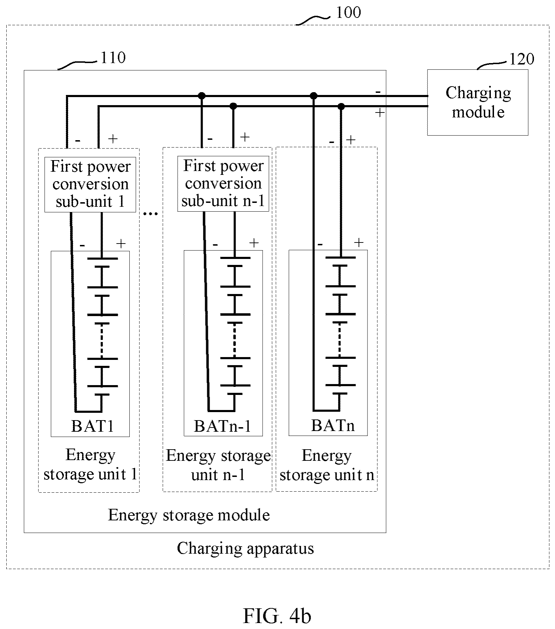

In some embodiments, referring to FIG. 4b, each of at least some of the one or more energy storage units further includes a first power conversion sub-unit, where the first power conversion sub-unit is connected to a corresponding battery sub-unit and a first positive power supply terminal and a first negative power supply terminal of a corresponding energy storage unit, and is configured to convert the electric energy of the battery sub-unit into the second direct current; where under the condition that the energy storage unit does not include the first power conversion sub-unit, the battery sub-unit is directly connected to the first positive power supply terminal and the first negative power supply terminal of the corresponding energy storage unit to provide the second direct current.

Specifically, when the number of the energy storage units is one, the energy storage unit further includes a first power conversion sub-unit to convert the electric energy of the battery sub-unit into the second direct current.

When the number of the energy storage units are plurality, one first power conversion sub-unit may be provided in each of the plurality of energy storage units, or one first power conversion sub-unit may be provided in some of the plurality of energy storage units. For example, in FIG. 4b, energy storage unit 1 includes battery sub-unit BAT1 and first power conversion sub-unit 1, where the first power conversion sub-unit 1 is connected to battery sub-unit BAT1 and the first positive power supply terminal and the first negative power supply terminal of energy storage unit 1, to convert the electric energy of battery sub-unit BAT1 into the second direct current through the first power conversion sub-unit 1; energy storage unit n-1 includes battery sub-unit BATn-1 and first power conversion sub-unit n-1, where the first power conversion sub-unit n-1 is connected to battery sub-unit BATn-1 and the first positive power supply terminal and the first negative power supply terminal of energy storage unit n-1, to convert the electric energy of battery sub-unit BATn-1 into the second direct current through the first power conversion sub-unit n-1; and energy storage unit n includes battery sub-unit BATn, where battery sub-unit BATn is directly connected to the first positive power supply terminal and the first negative power supply terminal of energy storage unit n to provide the second direct current.

In some embodiments, during discharging of the battery sub-unit, maximum output power of the first power conversion sub-unit is greater than or equal to 350 kilowatts, and/or rated output power is greater than or equal to 310 kilowatts. During charging of the battery sub-unit, a ratio of the maximum output power of the input module 130 to the maximum output power of the first power conversion sub-unit is not greater than 1:4, and/or a ratio of the rated output power of the input module 130 to the rated output power of the first power conversion sub-unit is not greater than 1:4.

In the foregoing embodiment, each of some or all of the plurality of energy storage units may be provided with the first power conversion sub-unit, to convert the electric energy of the battery sub-unit into the second direct current through the first power conversion sub-unit, which can improve the flexibility of charging. In addition, by partially providing the first power conversion sub-units, the costs can be reduced under the condition of meeting the charging demands. This method can achieve connection of energy storage units with and without the first power conversion sub-unit, and has high applicability.

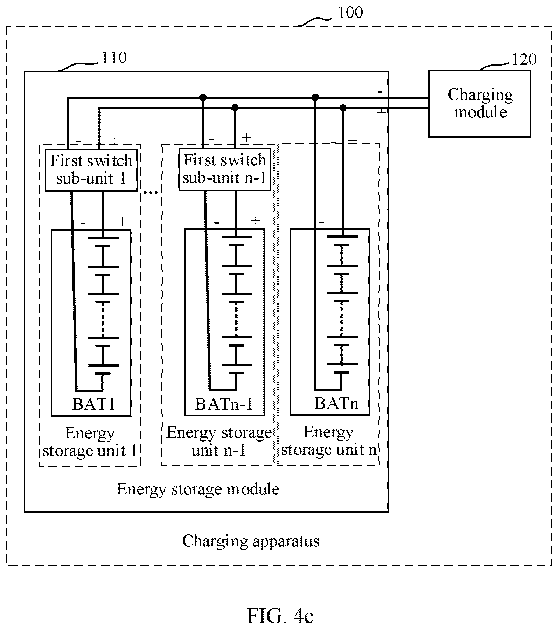

In some embodiments, referring to FIG. 4c, each of at least some of the one or more energy storage units further includes a first switch sub-unit, where the first switch sub-unit is connected to a corresponding battery sub-unit and a first positive power supply terminal and a first negative power supply terminal of a corresponding energy storage unit, and is configured to connect the corresponding battery sub-unit to the first positive power supply terminal and the first negative power supply terminal of the corresponding energy storage unit under the condition of being in an on-state, to provide the second direct current; where under the condition that the energy storage unit does not include the first switch sub-unit, the battery sub-unit is directly connected to the first positive power supply terminal and the first negative power supply terminal of the corresponding energy storage unit to provide the second direct current.

Specifically, when the number of the energy storage units is one, the energy storage unit further includes a first switch sub-unit. When the first switch sub-unit is in the on-state, the battery sub-unit is connected to the first positive power supply terminal and the first negative power supply terminal of the energy storage unit to provide the second direct current. Under abnormal conditions, for example, when the battery sub-unit or the charging module 120 is abnormal, the first switch sub-unit is turned off to reduce the further occurrence of abnormal incidents; and when the battery sub-unit does not need to work, for example, when the energy storage unit is not needed based on power demand, the first switch sub-unit is turned off to stop the battery sub-unit from providing the second direct current.

When the number of the energy storage units are plurality, one first switch sub-unit may be provided in each of the energy storage units, or one first switch sub-unit may be provided in each of some of the energy storage units. For example, in FIG. 4c, energy storage unit 1 includes battery sub-unit BAT1 and first switch sub-unit 1, where first switch sub-unit 1 is connected to battery sub-unit BAT1 and the first positive power supply terminal and the first negative power supply terminal of energy storage unit 1, and controls the on/off between battery sub-unit BAT1 and the first positive power supply terminal and the first negative power supply terminal of energy storage unit 1 through first switch sub-unit 1 to selectively provide the second direct current; energy storage unit n-1 includes battery sub-unit BATn-1 and first switch sub-unit n-1, where first switch sub-unit n-1 is connected to battery sub-unit BATn-1 and the first positive power supply terminal and the first negative power supply terminal of energy storage unit n-1, and controls the on/off between battery sub-unit BATn-1 and the first positive power supply terminal and the first negative power supply terminal of energy storage unit n-1 through first switch sub-unit n-1 to selectively provide the second direct current; and energy storage unit n includes battery sub-unit BATn, where battery sub-unit BATn is directly connected to the first positive power supply terminal and the first negative power supply terminal of energy storage unit n to provide the second direct current.

In the foregoing embodiment, each of some or all of the plurality of energy storage units may be provided with the first switch sub-unit, and selectively control the battery sub-unit to provide the second direct current through the first switch sub-unit, thereby improving the flexibility of charging and providing protection in abnormal conditions.

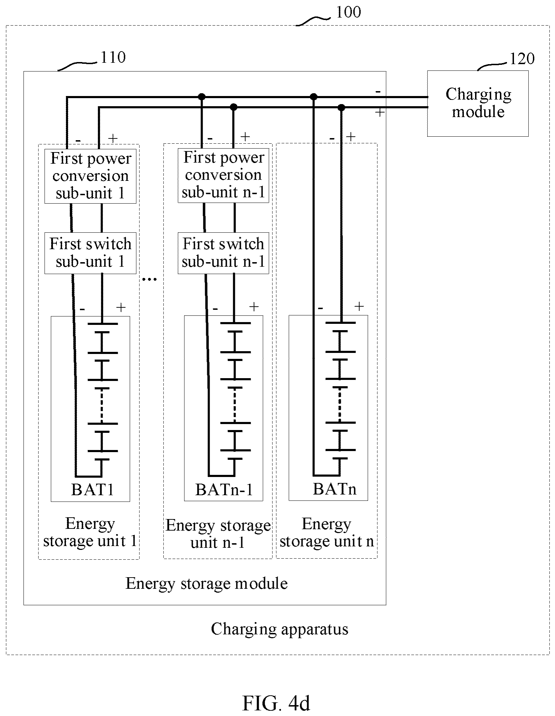

In some embodiments, referring to FIG. 4d, each of at least some of the one or more energy storage units further includes a first power conversion sub-unit and a first switch sub-unit, where the first power conversion sub-unit and the first switch sub-unit are connected in series between a corresponding battery sub-unit and a first positive power supply terminal and a first negative power supply terminal of a corresponding energy storage unit, and the first power conversion sub-unit is configured to convert the electric energy of the battery sub-unit into the second direct current under the condition that a corresponding first switch sub-unit is in an on-state; and under the condition that the energy storage unit does not include the first power conversion sub-unit and the first switch sub-unit, the battery sub-unit is directly connected to the first positive power supply terminal and the first negative power supply terminal of the corresponding energy storage unit to provide the second direct current.

Specifically, when the number of the energy storage units is one, the energy storage unit further includes a first power conversion sub-unit and a first switch sub-unit. When the first switch sub-unit is in the on-state, the first power conversion sub-unit converts the electric energy of the battery sub-unit into the second direct current. Under abnormal conditions, for example, when the battery sub-unit or the charging module 120 is abnormal, the first switch sub-unit is turned off, and the first power conversion sub-unit stops working so as to reduce the further occurrence of abnormal incidents. When the battery sub-unit is not required to work, for example, when the energy storage unit is not required to work based on power demand, the first switch sub-unit is turned off, and the first power conversion sub-unit stops working to stop the battery sub-unit from providing the second direct current.

When the number of the energy storage units are plurality, one first switch sub-unit and one first power conversion sub-unit may be provided in each of the plurality of energy storage units, or one first switch sub-unit and one first power conversion sub-unit may be provided in each of some of the energy storage units. For example, in FIG. 4d, energy storage unit 1 includes battery sub-unit BAT1, first switch sub-unit 1, and first power conversion sub-unit 1, where first switch sub-unit 1 and first power conversion sub-unit 1 are connected in series between battery sub-unit BAT1 and the first positive power supply terminal and the first negative power supply terminal of energy storage unit 1, and first power conversion sub-unit 1 converts the electric energy of battery sub-unit BAT1 into the second direct current under the condition that first switch sub-unit 1 is in an on-state; energy storage unit n-1 includes battery sub-unit BATn-1, first switch sub-unit n-1, and first power conversion sub-unit n-1, where first switch sub-unit n-1 and first power conversion sub-unit n-1 are connected in series between battery sub-unit BATn-1 and the first positive power supply terminal and the first negative power supply terminal of energy storage unit n-1, and first power conversion sub-unit n-1 converts the electric energy of battery sub-unit BATn-1 into the second direct current under the condition that first switch sub-unit n-1 is in an on-state; and energy storage unit n includes battery sub-unit BATn, where battery sub-unit BATn is directly connected to the first positive power supply terminal and the first negative power supply terminal of energy storage unit n to provide the second direct current.

It should be noted that in some embodiments, each of some of the energy storage units may include the first switch sub-unit, and each of some other of the energy storage units includes the first power conversion sub-unit, which is not specifically limited herein.

In the foregoing embodiment, each of some or all of the plurality of energy storage units may be provided with the first switch sub-unit and the first power conversion sub-unit, thereby improving the flexibility of charging and providing protection in abnormal conditions.

In some embodiments, the first power conversion sub-unit is a bidirectional DCDC sub-unit, and the battery sub-units are charged and discharged through the bidirectional DCDC sub-unit. The bidirectional DCDC sub-unit includes but is not limited to a BUCK-BOOST circuit, or the like, which is not specifically limited herein.

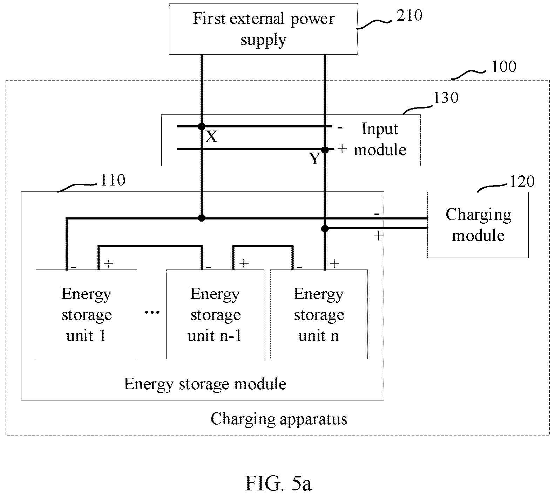

In some embodiments, referring to FIG. 5a, the input module 130 includes an input interface (X,Y), where the input interface is connected to the second positive power supply terminal and the second negative power supply terminal of the energy storage module 110, and is configured to provide charging energy for each of the energy storage units based on a third direct current provided by a first external power supply 210.

Specifically, the first external power supply 210 is configured to generate a third direct current and transport the third direct current to the energy storage module 110 through the input interface to charge each of the energy storage units in the energy storage module 110. For example, the first external power supply 210 may include a first transformer and a first AC-DC conversion module, where a primary winding of the first transformer is connected to an alternating-current power grid to convert a second alternating current provided by the alternating-current power grid into a first alternating current; and the first AC-DC conversion module is connected to a secondary winding of the first transformer and the input interface to convert the first alternating current into a third direct current and transport the third direct current to the energy storage module 110 through the input interface.

The first AC-DC conversion module may be a unidirectional ACDC sub-unit or a bidirectional ACDC sub-unit. When the first AC-DC conversion module is a bidirectional ACDC sub-unit, the first AC-DC conversion module not only can charge the energy storage module 110, but also can feed the electric energy of the energy storage module 110 back to the alternating-current power grid. The specific circuit structure of the unidirectional ACDC sub-unit or the bidirectional ACDC sub-unit is not limited herein.

It should be noted that in this example, the maximum output power and the rated output power of the input module 130 are also the maximum output power and the rated output power of the first external power supply 210.

In the foregoing embodiment, under the condition that an external power supply provides direct current, the battery sub-units may be charged through the input interface.

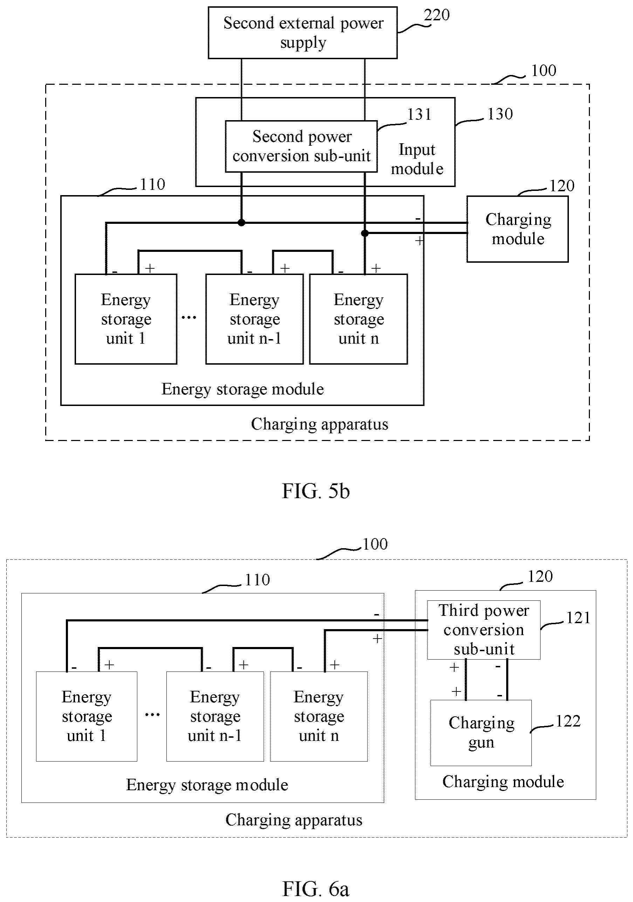

In some embodiments, referring to FIG. 5b, the input module 130 includes a second power conversion sub-unit 131, where the second power conversion sub-unit 131 is connected to the second positive power supply terminal and the second negative power supply terminal of the energy storage module 110, and is configured to provide charging energy for each of the energy storage units based on a first alternating current provided by a second external power supply 220.

Specifically, the second external power supply 220 is configured to generate a first alternating current and provide the first alternating current to the second power conversion sub-unit 131 in the input module 130. The second power conversion sub-unit 131 charges the battery sub-units in the energy storage module 110. For example, the second external power supply 220 may include a first transformer, where a primary winding of the first transformer is connected to an alternating-current power grid. The second power conversion sub-unit 131 is connected to a secondary winding of the first transformer and the energy storage module 110. The first transformer converts a second alternating current provided by the alternating-current power grid into the first alternating current and provides the first alternating current to the second power conversion sub-unit 131. The second power conversion sub-unit 131 converts the first alternating current into a third direct current to charge the energy storage module 110.

The second power conversion sub-unit 131 may be a unidirectional ACDC sub-unit or a bidirectional ACDC sub-unit. When the second power conversion sub-unit 131 is a bidirectional ACDC sub-unit, the second power conversion sub-unit 131 not only can charge the energy storage module 110 but also can feed the electric energy of the energy storage module 110 back to the alternating-current power grid. The specific circuit structure of the unidirectional ACDC sub-unit or the bidirectional ACDC sub-unit is not limited herein.

It should be noted that in this example, the maximum output power and the rated output power of the input module 130 are also the maximum output power and the rated output power of the second power conversion sub-unit 131.

In the foregoing embodiment, under the condition that an external power supply provides alternating current, the battery sub-units may be charged through the second power conversion sub-unit.

In some embodiments, referring to FIG. 6a, the charging module 120 includes a third power conversion sub-unit 121 and a charging gun 122, where a positive input terminal and a negative input terminal of the third power conversion sub-unit 121 are correspondingly connected to the second positive power supply terminal and the second negative power supply terminal of the energy storage module 110, a positive output terminal and a negative output terminal of the third power conversion sub-unit 121 are correspondingly connected to a positive input terminal and a negative input terminal of the charging gun 122, and the third power conversion sub-unit 121 is configured to convert the first direct current into a fourth direct current for charging output through the charging gun 122.

Specifically, during charging a device to be charged, the one or more energy storage units provide the second direct current, so that the energy storage module 110 provides the first direct current. The first direct current is converted into the fourth direct current by the third power conversion sub-unit 121 and provided to the charging gun 122, and then the charging gun 122 provides the fourth direct current to the device to be charged for charging.

In this example, the third power conversion sub-unit 121 is bipolar, meaning it has a positive input terminal and a negative input terminal. In this case, the positive input terminal and the negative input terminal of the third power conversion sub-unit 121 are directly connected to the second positive power supply terminal and the second negative power supply terminal of the energy storage module 110, respectively. A positive output terminal and a negative output terminal of the third power conversion sub-unit 121 are directly connected to a positive input terminal and a negative input terminal of the charging gun 122, respectively. The negative input terminal of the charging gun 122 and the second negative power supply terminal of the energy storage module 110 are not shared. Thus, this is suitable for application scenarios in which the third power conversion sub-unit 121 is bipolar.

The third power conversion sub-unit 121 may be a bipolar unidirectional DCDC sub-unit or a bipolar bidirectional DCDC sub-unit. When the third power conversion sub-unit 121 is a bipolar bidirectional DCDC sub-unit, the third power conversion sub-unit 121 not only can charge a device to be charged, feed the electric energy of the device back to be charged to the energy storage module 110, but also can feed the electric energy back to the alternating-current power grid mentioned in the preceding example through the input module 130, ultimately achieving free conversion of the electric energy between the alternating-current power grid, the device to be charged, and the energy storage module.

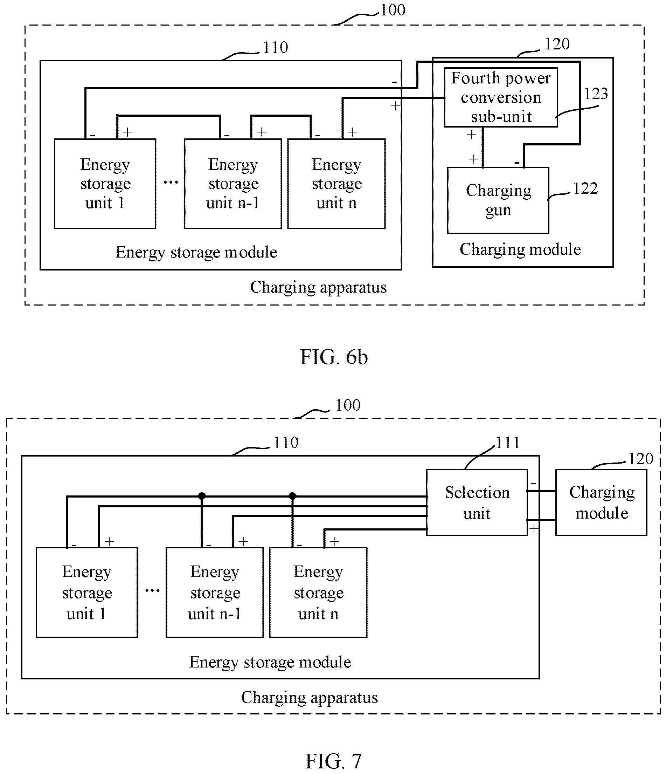

In some embodiments, referring to FIG. 6b, the charging module 120 includes a fourth power conversion sub-unit 123 and a charging gun 122, where a positive input terminal of the fourth power conversion sub-unit 123 is connected to the second positive power supply terminal of the energy storage module 110, a positive output terminal of the fourth power conversion sub-unit 123 is connected to a positive input terminal of the charging gun 122, a negative input terminal of the charging gun 122 is connected to the second negative power supply terminal of the energy storage module 110, and the fourth power conversion sub-unit 123 is configured to convert the first direct current into a fourth direct current for charging output through the charging gun 122.

Specifically, during charging a device to be charged, the one or more energy storage units provide the second direct current, so that the energy storage module 110 provides the first direct current. The first direct current is converted into the fourth direct current by the fourth power conversion sub-unit 123 and provided to the charging gun 122, and then the charging gun 122 provides the fourth direct current to the device to be charged for charging.

In this example, the fourth power conversion sub-unit 123 is unipolar, meaning that it has only the positive input terminal. In this case, the positive input terminal of the fourth power conversion sub-unit 123 is directly connected to the second positive power supply terminal of the energy storage module 110, and the positive output terminal of the fourth power conversion sub-unit 123 is directly connected to the positive input terminal of the charging gun 122. The negative input terminal of the charging gun 122 is directly connected to the second negative power supply terminal of the energy storage module 110, meaning that the negative input terminal of the charging gun 122 and the second negative power supply terminal of the energy storage module 110 are shared. Thus, this is suitable for application scenarios in which the fourth power conversion sub-unit 123 is unipolar and the cost is low.

The fourth power conversion sub-unit 123 may be a unipolar unidirectional DCDC sub-unit or a unipolar bidirectional DCDC sub-unit. When the fourth power conversion sub-unit 123 is a unipolar bidirectional DCDC sub-unit, the fourth power conversion sub-unit 123 not only can charge the device to be charged, feed the electric energy of the device to be charged back to the energy storage module 110, but also can feed the electric energy back to the alternating-current power grid mentioned in the preceding example through the input module 130, ultimately achieving free conversion of the electric energy between the alternating-current power grid, the device to be charged, and the energy storage module.

In the foregoing embodiment, whether the negative input terminal of the charging gun is shared or not can be applied to different power supply scenarios, which expands the selection range when choosing circuit structure types.

In some embodiments, referring to FIG. 7, the energy storage module 110 further includes a selection unit 111, where the selection unit 111 is connected to the one or more energy storage units, and is configured to select at least one energy storage unit from the one or more energy storage units to be connected to the second positive power supply terminal and the second negative power supply terminal of the energy storage module 110 to provide the first direct current.

Specifically, during charging, the selection unit 111 may select one energy storage unit 1 to be connected to the second positive power supply terminal and the second negative power supply terminal of the energy storage module 110 to provide the first direct current; or select all of energy storage unit 1, ..., energy storage unit n-1, and energy storage unit n to be connected to the second positive power supply terminal and the second negative power supply terminal of the energy storage module 110 to provide the first direct current. Then, the charging module 120 provides the charging output based on the first direct current.

In the foregoing embodiment, the selection unit selectively controls the output of the energy storage units, which can improve the flexibility of charging and meet different charging demands.

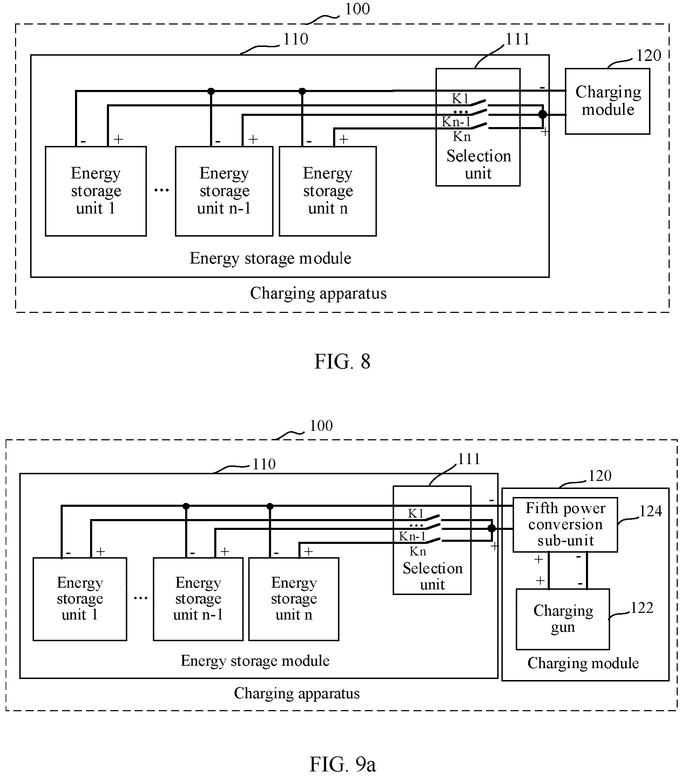

In some embodiments, referring to FIG. 8, the energy storage module 110 includes one second positive power supply terminal and one second negative power supply terminal, the selection unit 111 includes a plurality of second switch sub-units, each of the second switch sub-units is connected to one energy storage unit, each of the second switch sub-units is connected in series between a first positive power supply terminal of a corresponding energy storage unit and the second positive power supply terminal of the energy storage module 110, the first negative power supply terminal(s) of the one or more energy storage units is(are) connected to the second negative power supply terminal of the energy storage module 110, and the second switch sub-unit is configured to connect the first positive power supply terminal of the corresponding energy storage unit to the second positive power supply terminal of the energy storage module 110 under the condition of being in an on-state.

Specifically, the selection unit 111 includes second switch sub-unit K1, ..., second switch sub-unit Kn-1, and second switch sub-unit Kn. Second switch sub-unit K1 is connected in series between the first positive power supply terminal of energy storage unit 1 and the second positive power supply terminal of the energy storage module 110; ...; second switch sub-unit Kn-1 is connected in series between the first positive power supply terminal of energy storage unit n-1 and the second positive power supply terminal of the energy storage module 110; and the second switch sub-unit Kn is connected in series between the first positive power supply terminal of energy storage unit n and the second positive power supply terminal of the energy storage module 110. By controlling the on-off state of the second switch sub-units, the corresponding energy storage unit is selected to provide the second direct current, so that the energy storage module 110 provides the first direct current, and in this case, the charging module 120 converts the first direct current into the fourth direct current to charge a device to be charged.

In the foregoing embodiment, one second positive power supply terminal is provided and the selection unit selectively controls an energy storage unit to provide the second direct current, which can improve the flexibility of charging and meet charging demands.

In some embodiments, referring to FIG. 9a, the charging module 120 includes a fifth power conversion sub-unit 124 and a charging gun 122, where a positive input terminal and a negative input terminal of the fifth power conversion sub-unit 124 are correspondingly connected to the second positive power supply terminal and the second negative power supply terminal of the energy storage module 110, a positive output terminal and a negative output terminal of the fifth power conversion sub-unit 124 are correspondingly connected to a positive input terminal and a negative input terminal of the charging gun 122, and the fifth power conversion sub-unit 124 is configured to convert the first direct current into a fourth direct current for charging output through the charging gun 122.

It should be noted that for the connection relationship between the fifth power conversion sub-unit 124 and the charging gun 122 and the energy storage module 110, as well as the structure of the fifth power conversion sub-unit 124, refer to the relevant descriptions of the third power conversion sub-unit 121 mentioned above. Details are not repeated herein.

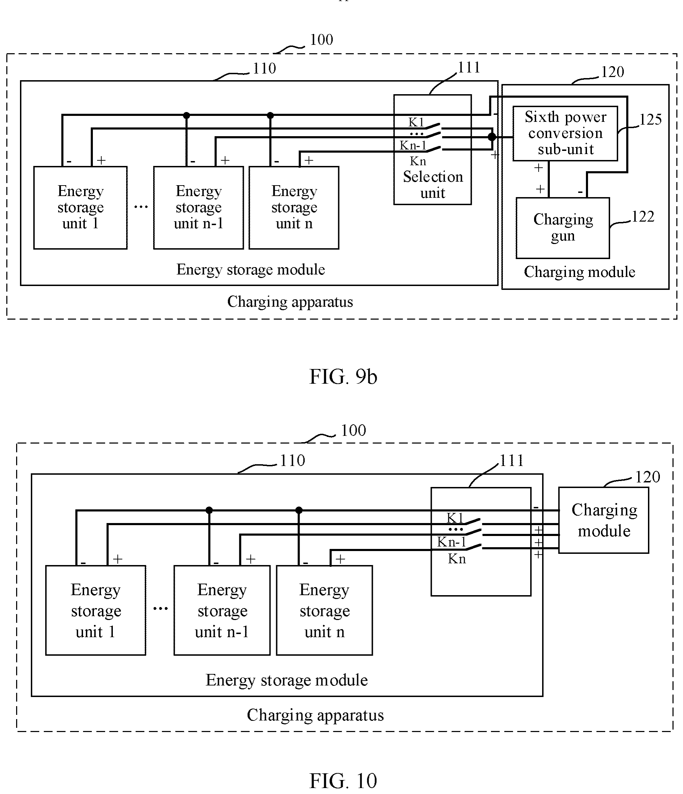

In some embodiments, referring to FIG. 9b, the charging module 120 includes a sixth power conversion sub-unit 125 and a charging gun 122, where a positive input terminal of the sixth power conversion sub-unit 125 is connected to the second positive power supply terminal of the energy storage module 110, a positive output terminal of the sixth power conversion sub-unit 125 is connected to a positive input terminal of the charging gun 122, a negative input terminal of the charging gun 122 is connected to the second negative power supply terminal of the energy storage module 110, and the sixth power conversion sub-unit 125 is configured to convert the first direct current into a fourth direct current for charging output through the charging gun 122.

It should be noted that for the connection relationship between the sixth power conversion sub-unit 125 and the charging gun 122 and the energy storage module 110, as well as the structure of the sixth power conversion sub-unit 125, refer to the relevant descriptions of the fourth power conversion sub-unit 123 mentioned above. Details are not repeated herein.

In some embodiments, referring to FIG. 10, the energy storage module 110 includes a plurality of second positive power supply terminals, the energy storage module 110 includes one second negative power supply terminal, the selection unit 111 includes a plurality of second switch sub-units, each of the second switch sub-units is connected to one energy storage unit and one second positive power supply terminal, each of the second switch sub-units is connected in series between a first positive power supply terminal of a corresponding energy storage unit and a corresponding second positive power supply terminal, the first negative power supply terminal(s) of the one or more energy storage units is(are) connected to the second negative power supply terminal of the energy storage module 110, and the second switch sub-unit is configured to connect the first positive power supply terminal of the corresponding energy storage unit to the corresponding second positive power supply terminal under the condition of being in an on-state.

Specifically, the selection unit 111 includes second switch sub-unit K1, ..., second switch sub-unit Kn-1, and second switch sub-unit Kn. Second switch sub-unit K1 is connected in series between the first positive power supply terminal of energy storage unit 1 and one second positive power supply terminal of the energy storage module 110; ...; second switch sub-unit Kn-1 is connected in series between the first positive power supply terminal of energy storage unit n-1 and another second positive power supply terminal of the energy storage module 110; and the second switch sub-unit Kn is connected in series between the first positive power supply terminal of energy storage unit n and another second positive power supply terminal of the energy storage module 110. By controlling the on-off state of the second switch sub-units, the corresponding energy storage unit is selected to provide the second direct current, so that the energy storage module 110 provides the first direct current, and in this case, the charging module 120 converts the first direct current into the fourth direct current to charge a device to be charged. It should be noted that the first direct current herein includes a plurality of second direct currents, and the charging module 120 may selectively convert one or more second direct currents into the fourth direct current.

In the foregoing embodiment, a plurality of second positive power supply terminals are provided and the selection unit selectively controls an energy storage unit to provide the second direct current, which can improve the flexibility of charging and meet charging demands.

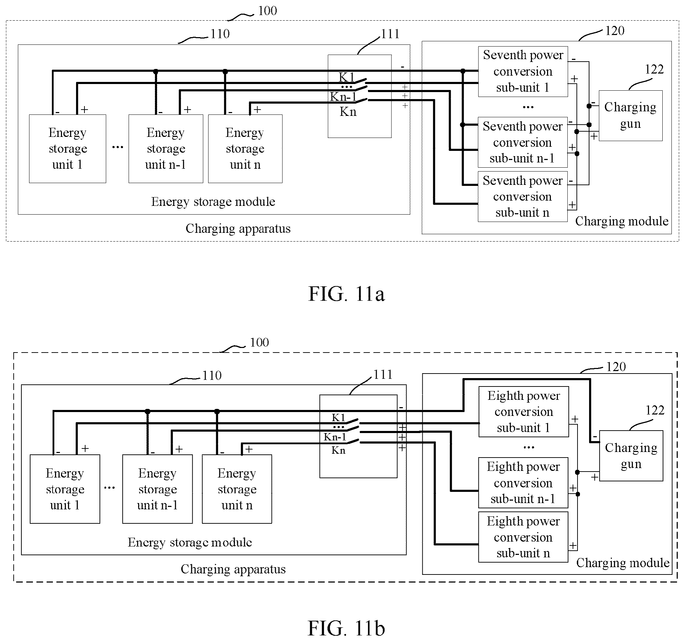

In some embodiments, referring to FIG. 11a, the charging module 120 includes a plurality of seventh power conversion sub-units and a charging gun 122, where a positive input terminal and a negative input terminal of each of the seventh power conversion sub-units are correspondingly connected to one second positive power supply terminals and the second negative power supply terminal, a positive output terminal and a negative output terminal of each of the seventh power conversion sub-units are correspondingly connected to a positive input terminal and a negative input terminal of the charging gun, and the plurality of seventh power conversion sub-units are configured to convert the first direct current into a fourth direct current for charging output through the charging gun.

Specifically, the plurality of seventh power conversion sub-units are seventh power conversion sub-unit 1, ..., seventh power conversion sub-unit n-1, and seventh power conversion sub-unit n. The positive input terminal of seventh power conversion sub-unit 1 is connected to one second positive power supply terminal; ..., the positive input terminal of seventh power conversion sub-unit n-1 is connected to another second positive power supply terminal; and the positive input terminal of seventh power conversion sub-unit n is connected to still another second positive power supply terminal. The negative input terminals of seventh power conversion sub-unit 1, ..., seventh power conversion sub-unit n-1, and seventh power conversion sub-unit n are all connected to the second negative power supply terminal. The positive output terminals and the negative output terminals of seventh power conversion sub-unit 1, ..., seventh power conversion sub-unit n-1, and seventh power conversion sub-unit n are connected to the positive input terminal and the negative input terminal of the charging gun 122, respectively.

In this example, each of the seventh power conversion sub-units may convert the second direct current of the corresponding energy storage unit into the fifth direct current, and ultimately the plurality of seventh power conversion sub-units output the fourth direct current.

The seventh power conversion sub-unit may be a bipolar unidirectional DCDC sub-unit or a bipolar bidirectional DCDC sub-unit. When the seventh power conversion sub-unit is a bipolar bidirectional DCDC sub-unit, the seventh power conversion sub-unit not only can charge a device to be charged, feed the electric energy of the device to be charged back to the energy storage module 110, but also can feed the electric energy back to the alternating-current power grid mentioned in the preceding example through the input module 130, ultimately achieving free conversion of the electric energy between the alternating-current power grid, the device to be charged, and the energy storage module.

In some embodiments, referring to FIG. 11b, the charging module 120 includes a plurality of eighth power conversion sub-units and a charging gun 122, where a positive input terminal of each of the eighth power conversion sub-units is connected to one second positive power supply terminal, a positive output terminal of each of the eighth power conversion sub-units is connected to a positive input terminal of the charging gun 122, a negative input terminal of the charging gun 122 is connected to the second negative power supply terminal of the energy storage module 110, and the plurality of eighth power conversion sub-units are configured to convert the first direct current into a fourth direct current for charging output through the charging gun 122.

Specifically, the plurality of eighth power conversion sub-units are eighth power conversion sub-unit 1, ..., eighth power conversion sub-unit n-1, and eighth power conversion sub-unit n. The positive input terminal of eighth power conversion sub-unit 1 is connected to one second positive power supply terminal; ...; the positive input terminal of eighth power conversion sub-unit n-1 is connected to another second positive power supply terminal; and the positive input terminal of eighth power conversion sub-unit n is connected to still another second positive power supply terminal. The positive output terminals of eighth power conversion sub-unit 1, ..., eighth power conversion sub-unit n-1, and eighth power conversion sub-unit n are all connected to the positive input terminal of the charging gun 122, and the negative input terminal of the charging gun 122 is connected to the second negative power supply terminal of the energy storage module 110.

In this example, each of the eighth power conversion sub-units may convert the second direct current of the corresponding energy storage unit into the fifth direct current, and ultimately the plurality of eighth power conversion sub-units output the fourth direct current.

The eighth power conversion sub-unit may be a unipolar unidirectional DCDC sub-unit or a unipolar bidirectional DCDC sub-unit. When the eighth power conversion sub-unit is a unipolar bidirectional DCDC sub-unit, the eighth power conversion sub-unit not only can charge a device to be charged, feed the electric energy of the device to be charged back to the energy storage module 110, but also can feed the electric energy back to the alternating-current power grid mentioned in the preceding example through the input module 130, ultimately achieving free conversion of the electric energy between the alternating-current power grid, the device to be charged, and the energy storage module.

In the foregoing embodiment, whether the negative input terminal of the charging gun is shared or not can be applied to different power supply scenarios, which expands the selection range when choosing circuit structure types.

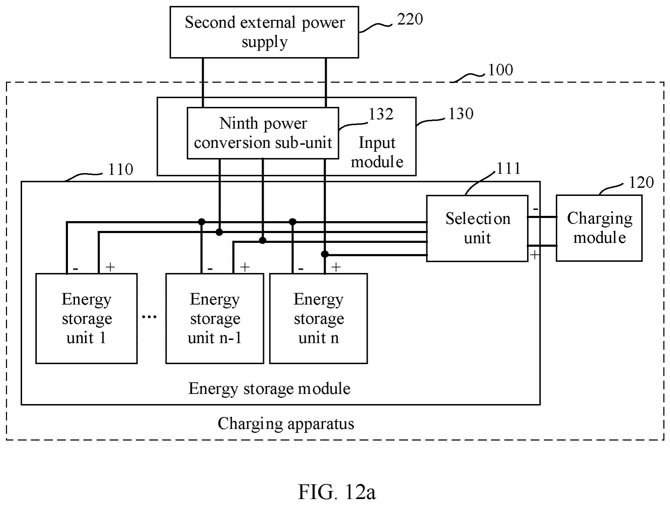

In some embodiments, referring to FIG. 12a, the input module 130 includes a ninth power conversion sub-unit 132, where the ninth power conversion sub-unit 132 is connected to the one or more energy storage units, and is configured to provide charging energy for each of the energy storage units based on a first alternating current provided by a second external power supply 220.

Specifically, the second external power supply 220 is configured to generate a first alternating current and provide the first alternating current to the ninth power conversion sub-unit 132 in the input module 130. The ninth power conversion sub-unit 132 charges the battery sub-units in the energy storage module 110. For example, the second external power supply 220 may include a second transformer, where a primary winding of the second transformer is connected to an alternating-current power grid, and a secondary winding of the second transformer is connected to the ninth power conversion sub-unit 132. The second transformer converts a second alternating current provided by the alternating-current power grid into the first alternating current and provides the first alternating current to the ninth power conversion sub-unit 132. The ninth power conversion sub-unit 132 converts the first alternating current into a third direct current to charge the energy storage module 110.

For example, the second external power supply 220 is a triphase alternating current power supply, and the ninth power conversion sub-unit 132 is a unidirectional triphase ACDC sub-unit or a bidirectional triphase ACDC sub-unit. In this case, each phase of the triphase ACDC sub-unit is connected to one energy storage unit to charge the corresponding energy storage unit. When the ninth power conversion sub-unit 132 is a bidirectional triphase ACDC sub-unit, the ninth power conversion sub-unit 132 not only can charge the energy storage module 110 but also feed the electric energy of the energy storage module 110 back to the alternating-current power grid. In this way, in a triphase alternating current, a uniphase alternating current is realized by the energy storage unit, and three energy storage units can realize the function of triphase alternating current, for example, triphase power frequency alternating current with a phase difference of 120°. The specific circuit structure of the unidirectional triphase ACDC sub-unit or the bidirectional triphase ACDC sub-unit is not limited herein.

It should be noted that in this example, the maximum output power and the rated output power of the input module 130 are also the maximum output power and the rated output power of the ninth power conversion sub-unit 132.

In the foregoing embodiment, under the condition that an external power supply provides alternating current, the battery sub-units can be charged through the ninth power conversion sub-unit.

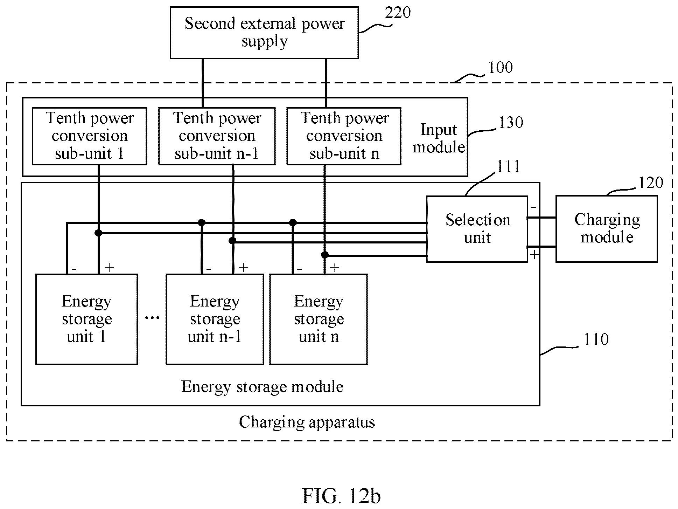

In some embodiments, referring to FIG. 12b, the input module 130 includes a plurality of tenth power conversion sub-units, each of the tenth power conversion sub-units is connected to one energy storage unit, and the plurality of tenth power conversion sub-units are configured to provide charging energy for each of the energy storage units based on a first alternating current provided by a second external power supply 220.

Specifically, the plurality of tenth power conversion sub-units are tenth power conversion sub-unit 1, ..., tenth power conversion sub-unit n-1, and tenth power conversion sub-unit n. Tenth power conversion sub-unit 1 is connected to the second external power supply 220 and energy storage unit 1, respectively; ...; tenth power conversion sub-unit n-1 is connected to the second external power supply 220 and energy storage unit n-1, respectively; and tenth power conversion sub-unit n is connected to the second external power supply 220 and energy storage unit n, respectively. Each of the tenth power conversion sub-units may provide charging energy for the corresponding energy storage unit based on the first alternating current provided by the second external power supply 220.

For example, the second external power supply 220 is a triphase alternating current power supply, the number of the tenth power conversion sub-units is three, and each of the tenth power conversion sub-units is a unidirectional uniphase ACDC sub-unit or a bidirectional uniphase ACDC sub-unit. In this case, each of the tenth power conversion sub-units is connected to one phase of the triphase alternating current power supply to charge the corresponding energy storage unit. When the tenth power conversion sub-unit is a bidirectional uniphase ACDC sub-unit, the tenth power conversion sub-unit not only can charge the energy storage module 110, but also can feed the electric energy of the energy storage module 110 back to the alternating-current power grid. During the feeding process, the three bidirectional uniphase ACDC sub-units cooperate with each other to generate a triphase alternating current, which is fed back to the triphase alternating current mains. Thus, in the triphase alternating current, a uniphase alternating current is realized by the energy storage unit, and three energy storage units can realize the function of triphase alternating current. The specific circuit structure of the unidirectional uniphase ACDC sub-unit or the bidirectional uniphase ACDC sub-unit is not limited herein.

It should be noted that in this example, the maximum output power and the rated output power of the input module 130 are also a sum of the maximum output power and the rated output power of the plurality of tenth power conversion sub-units.

In the foregoing embodiment, under the condition that an external power supply provides alternating current, the battery sub-units may be charged through the plurality of tenth power conversion sub-units.

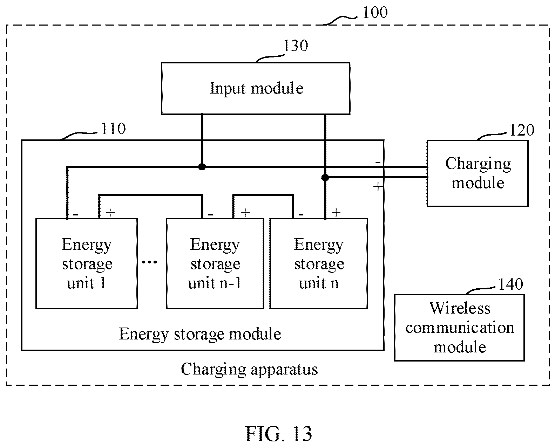

In some embodiments, referring to FIG. 13, the charging apparatus 100 further includes a wireless communication module 140, where at least some of the energy storage module 110, the input module 130, and the charging module 120 are connected to the wireless communication module 140 to perform information exchange with an external device through the wireless communication module 140.

It should be noted that in the foregoing embodiment, various charging apparatus architectures are provided. For example, the plurality of energy storage units may be connected in series, in parallel, or in series-parallel; each of some or all of the plurality of energy storage units may be configured with a first power conversion sub-unit, a first switch sub-unit, or a first power conversion sub-unit and a first switch sub-unit; a unipolar power conversion sub-unit or a bipolar power conversion sub-unit may be used as the charging module, and a negative input terminal of the corresponding charging pile may be shared or not shared; in the triphase alternating current, a uniphase alternating current is realized by the energy storage unit, and three energy storage units can realize the function of triphase alternating current; the input module may be an alternating current input or a direct current input; and so on.

To make it clearer for those skilled in the art to understand this application, the following specific examples are provided, but they should not be considered as limitations to this application.

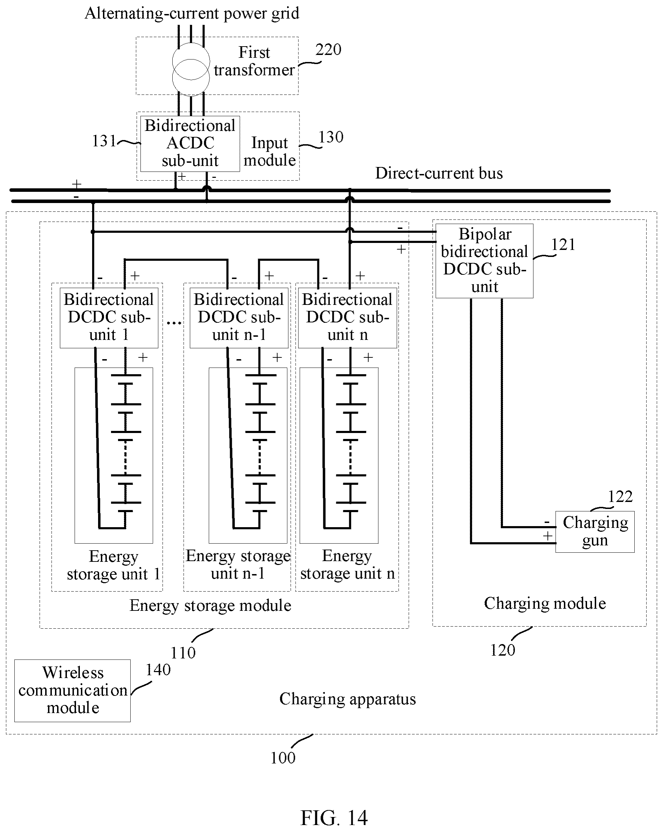

Example 1, referring to FIG. 14, the energy storage module 110 includes a plurality of energy storage units, where each of the energy storage units includes a battery sub-unit and a first power conversion sub-unit, the first power conversion sub-unit may be a bidirectional DCDC sub-unit, the plurality of energy storage units are connected in series between the second positive power supply terminal and the second negative power supply terminal of the energy storage module 110, and the second positive power supply terminal and the second negative power supply terminal of the energy storage module 110 are connected to a direct-current bus, to be specific, the plurality of energy storage units are connected in series to the direct-current bus. The charging module 120 includes a third power conversion sub-unit 121 and a charging gun 122, where the third power conversion sub-unit 121 has a high-voltage positive input terminal, a high-voltage negative input terminal, a high-voltage positive output terminal, and a high-voltage negative output terminal. The third power conversion sub-unit 121 may be a bipolar bidirectional DCDC sub-unit. The input module 130 includes a second power conversion sub-unit 131, where the second power conversion sub-unit 131 may be a bidirectional ACDC sub-unit. The second external power supply 220 includes a first transformer connected to the alternating-current power grid.

During charging the energy storage module 110, the first transformer converts the second alternating current provided by the alternating-current power grid into the first alternating current, which is converted into a direct current through the bidirectional ACDC sub-unit first, and then the direct current charges the battery sub-units in the energy storage module 110 through the direct-current bus.

During charging a device to be charged, the energy storage units provide the second direct current based on the electric energy of the battery sub-units, and the energy storage module 110 obtains the first direct current based on the second direct current. The first direct current is converted into a fourth direct current through a high-power bipolar bidirectional DCDC sub-unit, and the fourth direct current charges the device to be charged through the charging gun 122, thereby achieving high-power charging and further realizing fast charging/super charging of the device to be charged.

It can be understood that under the action of the bidirectional ACDC sub-unit and the bipolar bidirectional DCDC sub-unit, the electric energy of the device to be charged may also be fed back to the energy storage module 110 or the alternating-current power grid, thereby achieving free switching of the electric energy among the device to be charged, the energy storage module 110, and the alternating-current power grid.

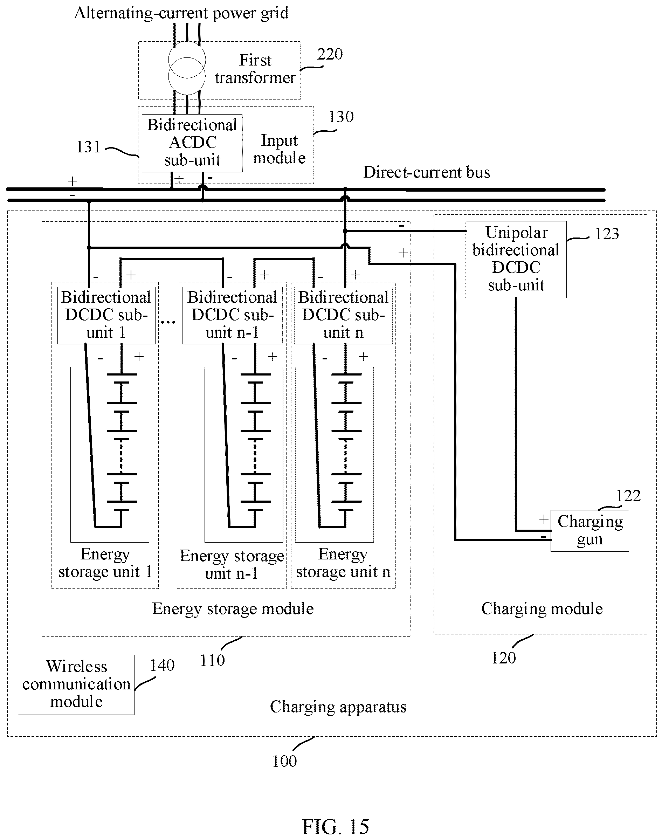

Example 2, referring to FIG. 15, this example is different from the example shown in FIG. 14 in that: the fourth power conversion sub-unit 123 has only a high-voltage positive input terminal and a high-voltage positive output terminal. A high-voltage negative input terminal of the charging gun 122 is directly connected to the second negative power supply terminal of the energy storage module 110, to be specific, the negative electrodes of the charging gun 122 and the energy storage module 110 are shared. The fourth power conversion sub-unit 123 may be a unipolar bidirectional DCDC sub-unit. For the same content, to avoid redundancy, details are not repeated herein.

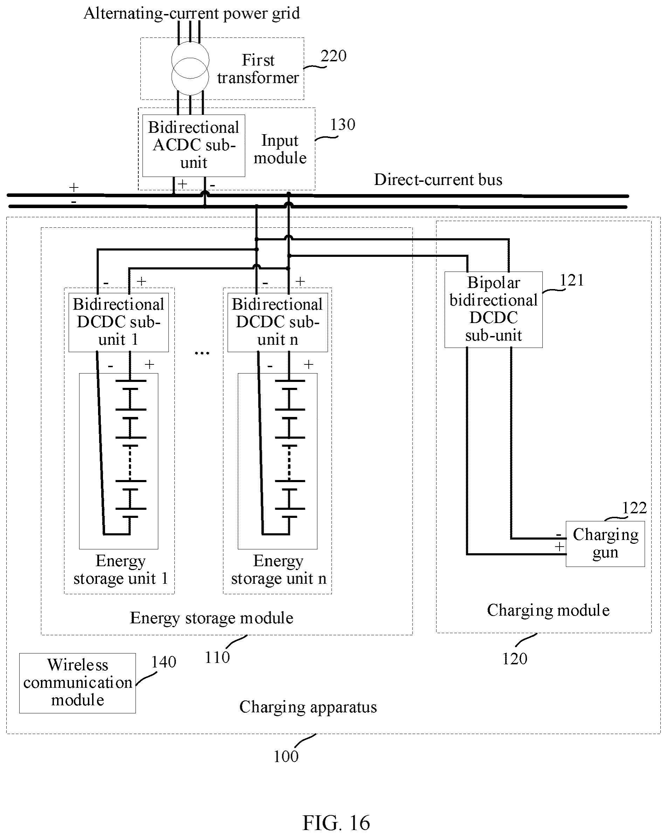

Example 3, referring to FIG. 16, this example is different from the example shown in FIG. 14 in that: the plurality of energy storage units are connected in parallel between the second positive power supply terminal and the second negative power supply terminal of the energy storage module 110, to be specific, the plurality of energy storage units are connected in parallel to the direct-current bus.

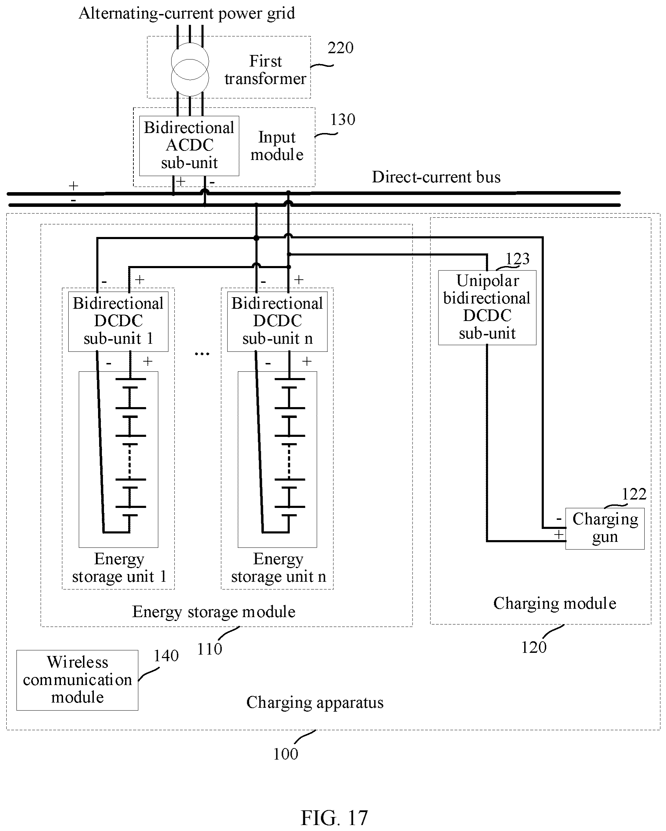

Example 4, referring to FIG. 17, this example is different from the example shown in FIG. 16 in that: the fourth power conversion sub-unit 123 has only a high-voltage positive input terminal and a high-voltage positive output terminal. A high-voltage negative input terminal of the charging gun 122 is directly connected to the second negative power supply terminal of the energy storage module 110, to be specific, the negative electrodes of the charging gun 122 and the energy storage module 110 are shared. The fourth power conversion sub-unit 123 may be a unipolar bidirectional DCDC sub-unit.

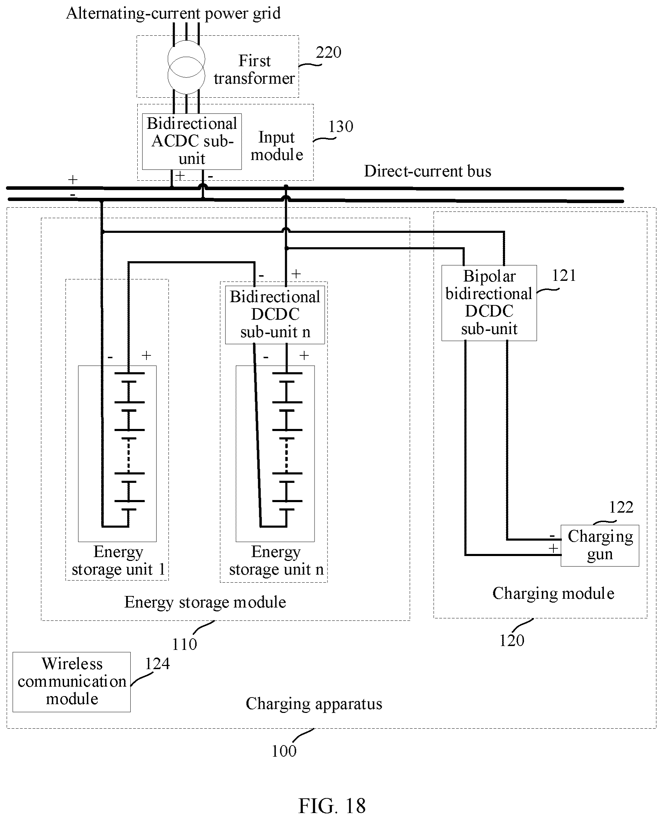

Example 5, referring to FIG. 18, this example is different from the example shown in FIG. 14 in that: each of some of the plurality of energy storage units includes a battery sub-unit, and each of some other of the energy storage units includes a battery sub-unit and a first power conversion sub-unit. For example, energy storage unit 1 includes a battery sub-unit, and energy storage unit n includes a battery sub-unit and a bidirectional DCDC sub-unit n.

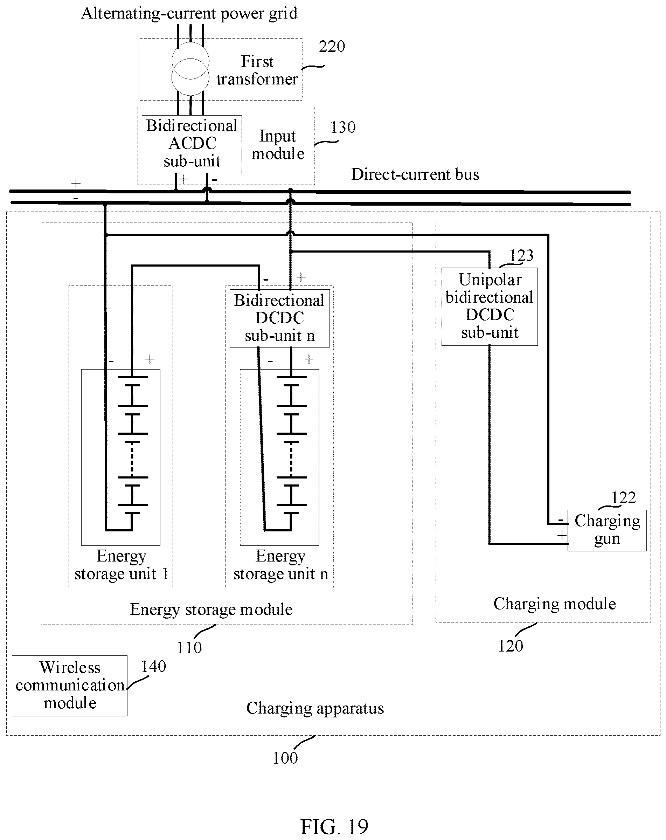

Example 6, referring to FIG. 19, this example is different from the example shown in FIG. 18 in that: the fourth power conversion sub-unit 123 has only a high-voltage positive input terminal and a high-voltage positive output terminal. A high-voltage negative input terminal of the charging gun 122 is directly connected to the second negative power supply terminal of the energy storage module 110, to be specific, the negative electrodes of the charging gun 122 and the energy storage module 110 are shared. The fourth power conversion sub-unit 123 may be a unipolar bidirectional DCDC sub-unit.

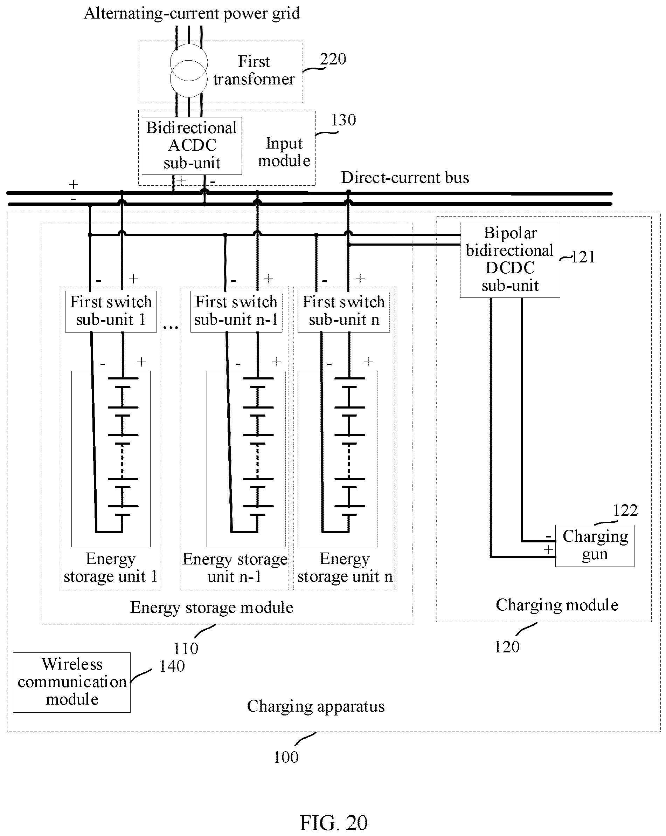

Example 7, referring to FIG. 20, this example is different from the example shown in FIG. 16 in that: each of the energy storage units includes a battery sub-unit and a first switch sub-unit. The first switch sub-unit may be a protective switch to protect the energy storage units under abnormal conditions.

In the examples 1 to 7 above, the energy storage module 110 and the charging module 120 are connected to the direct-current bus, to be specific, the charging apparatus 100 adopts the direct-current bus design. When the energy storage module 110 and the charging module 120 are both provided in plurality, the plurality of charging apparatuses 100 share the direct-current bus. When the charging apparatus 100 adopts the direct-current bus design and the maximum charging output power of the charging apparatus 100 is greater than or equal to 350 kilowatts, the maximum output power of the battery sub-unit is greater than or equal to 350 kilowatts, the rated power of the battery sub-unit is greater than or equal to 350 kilowatts, the rated energy of the battery sub-unit is greater than or equal to 58 kilowatts, the maximum discharge rate of the battery sub-unit is greater than or equal to 4C, the maximum output power of the first power conversion sub-unit is greater than or equal to 350 kilowatts, and the rated power of the first power conversion sub-unit is greater than or equal to 310 kilowatts. The maximum output power of the input module 130 is less than or equal to 150 kilowatts, and a ratio of the maximum output power of the input module 130 to the maximum output power of the first power conversion sub-unit is not greater than 1:4.

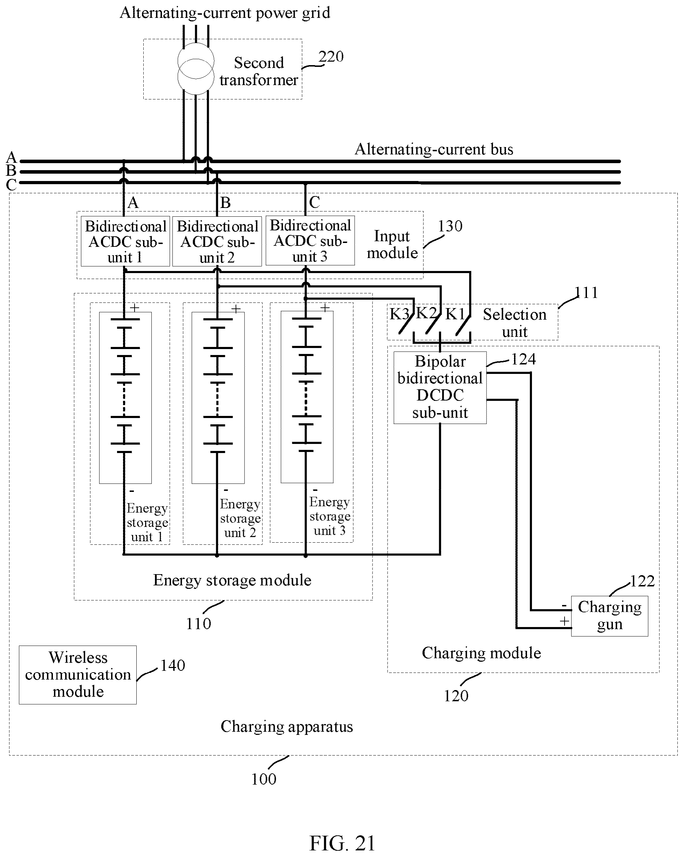

Example 8, referring to FIG. 21, the energy storage module 110 includes three energy storage units 1, 2 and 3 and the selection unit 111, where each of the energy storage units includes a battery sub-unit, and the selection unit 111 includes three second switch sub-units K1, K2 and K3. The charging module 120 includes a fifth power conversion sub-unit 124 and a charging gun 122, where the fifth power conversion sub-unit 124 has a high-voltage positive input terminal, a high-voltage negative input terminal, a high-voltage positive output terminal, and a high-voltage negative output terminal. The fifth power conversion sub-unit 124 may be a bipolar bidirectional DCDC sub-unit. The input module 130 includes three tenth power conversion sub-units, where the tenth power conversion sub-unit may be a bidirectional uniphase ACDC sub-unit. The second external power supply 220 includes a second transformer connected to the alternating-current power grid.

During charging the energy storage module 110, the second transformer converts the second alternating current provided by the alternating-current power grid into the first alternating current, which is converted into direct current through the bidirectional uniphase ACDC sub-unit, and the direct current charges the corresponding battery sub-unit. Each bidirectional uniphase ACDC sub-unit is connected to one phase of the alternating-current bus. For example, bidirectional uniphase ACDC sub-unit 1 is connected to phase A, bidirectional uniphase ACDC sub-unit 2 is connected to phase B, and bidirectional uniphase ACDC sub-unit 3 is connected to phase C. It should be noted that under the action of the bidirectional uniphase ACDC sub-unit, when the electric energy in the energy storage module 110 is fed back to the alternating-current power grid, the three bidirectional uniphase ACDC sub-units may cooperate with each other to generate a triphase alternating current with a phase difference of 120°, thereby realizing triphase alternating current through the three energy storage units.

During charging a device to be charged, the energy storage units provide the second direct current based on the electric energy of the battery sub-units, and the energy storage module 110 obtains the first direct current based on the second direct current selectively output by the selection unit 111. The first direct current is converted into a fourth direct current through a high-power bipolar bidirectional DCDC sub-unit, and the fourth direct current charges the device to be charged through the charging gun 122, thereby achieving high-power charging and further realizing fast charging/super charging of the device to be charged. In some examples, the second switch sub-units K1, K2, and K3 may be sequentially and individually turned on in a time-sharing manner to keep the power levels of the three energy storage units consistent.

It can be understood that under the action of the bidirectional uniphase ACDC sub-unit and the bipolar bidirectional DCDC sub-unit, the electric energy of the device to be charged can also be fed back to the energy storage module 110 or the alternating-current power grid, thereby achieving free switching of the electric energy among the device to be charged, the energy storage module 110, and the alternating-current power grid.

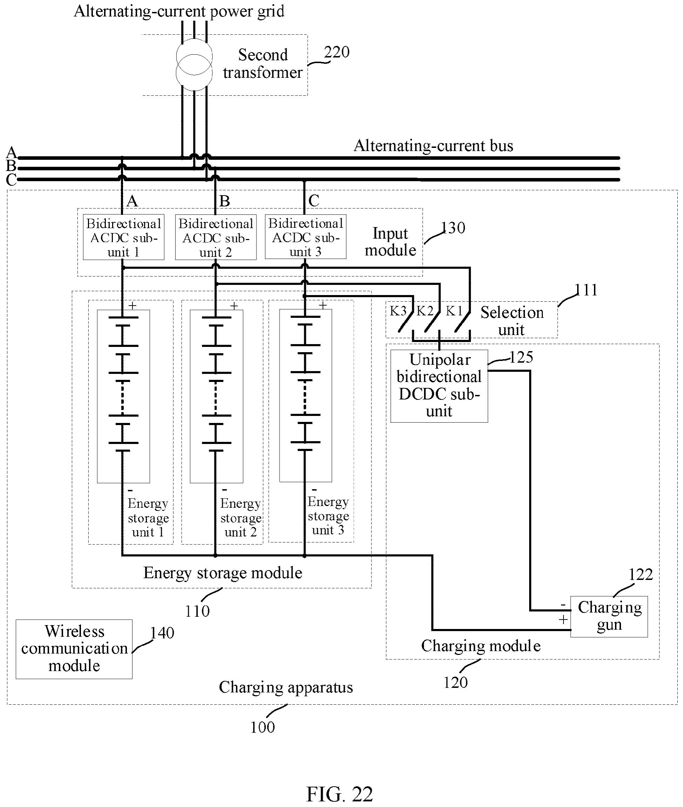

Example 9, referring to FIG. 22, this example is different from the example shown in FIG. 21 in that: the sixth power conversion sub-unit 125 has only a high-voltage positive input terminal and a high-voltage positive output terminal. A high-voltage negative input terminal of the charging gun 122 is directly connected to the second negative power supply terminal of the energy storage module 110, to be specific, the negative electrodes of the charging gun 122 and the energy storage module 110 are shared. The sixth power conversion sub-unit 125 may be a unipolar bidirectional DCDC sub-unit.

In the examples 8 and 9 above, the energy storage module 110 and the charging module 120 are connected to the alternating-current bus, to be specific, the charging apparatus 100 adopts the alternating-current bus design. When the energy storage module 110 and the charging module 120 are both provided in plurality, the plurality of charging apparatuses 100 share the alternating-current bus.

In the foregoing Examples 1 to 9, the charging apparatus 100 may communicate with an external device, including but not limited to a cloud service/monitoring platform, through the wireless communication module 140 to achieve 4G/5G communication. The cloud service/monitoring platform selects appropriate on-peak and off-peak periods according to on-peak and off-peak periods of a region in which the charging apparatus 100 is located and sends them to the charging apparatus 100, so that the charging apparatus 100 achieves the peak load shaving. For example, during on-peak periods of the alternating-current power grid, the alternating-current power grid does not charge the energy storage module 110, while during off-peak periods of the alternating-current power grid, the alternating-current power grid slowly charges the energy storage module 110.

It should be noted that the foregoing Examples 1 to 9 are merely exemplary descriptions, and based on the inventive concept of this application, all reasonable configurations of the aforementioned architectures should fall within the protection scope of this application.

Based on the foregoing embodiments, this application provides a charging apparatus. Without the need for additional transformers or transformer capacity expansion, energy storage units are configured inside the charging apparatus. This not only can enable the rapid charge of the charging apparatus, such as fast charging/super charging, but also can reduce the costs associated with adding new transformers or expanding transformer capacity.

The following describes the charging pile of this application in combination with specific embodiments.

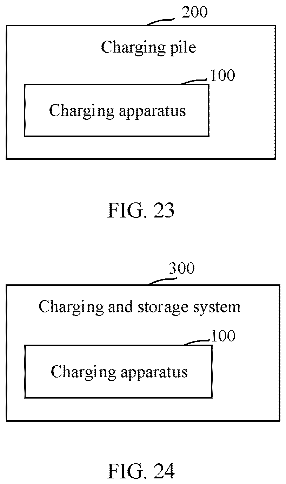

FIG. 23 is a schematic structural diagram of a charging pile 200 according to an embodiment of this application.

Referring to FIG. 23, the charging pile 200 includes the foregoing charging apparatus 100.

It should be noted that the explanations of the embodiments and beneficial effects of the charging apparatus are also applicable to the embodiments of the charging pile in this application. To avoid redundancy, detailed descriptions are not elaborated herein.

The following describes the charging and storage system of this application in combination with specific embodiments.

FIG. 24 is a schematic structural diagram of a charging and storage system 300 according to an embodiment of this application.

Referring to FIG. 24, the charging and storage system 300 includes the foregoing charging apparatus 100.

In some embodiments, the charging apparatus 100 is provided in plurality, and the plurality of charging apparatuses 100 share one direct-current bus or alternating-current bus.

In some embodiments, under the condition that the plurality of charging apparatuses 100 share one direct-current bus and the input module 130 of the charging apparatus 100 includes an input interface, the charging and storage system 300 further includes: a first transformer 310 and a first AC-DC conversion module 320, where a primary winding of the first transformer 310 is connected to an alternating-current power grid, and is configured to convert a second alternating current provided by an alternating-current power grid into a first alternating current; and the first AC-DC conversion module 320 is connected to a secondary winding of the first transformer 310 and the direct-current bus, and is configured to convert the first alternating current into a third direct current; where the second positive power supply terminals and the second negative power supply terminals of the energy storage modules 110 in the plurality of charging apparatuses 100 are all connected to the direct-current bus.

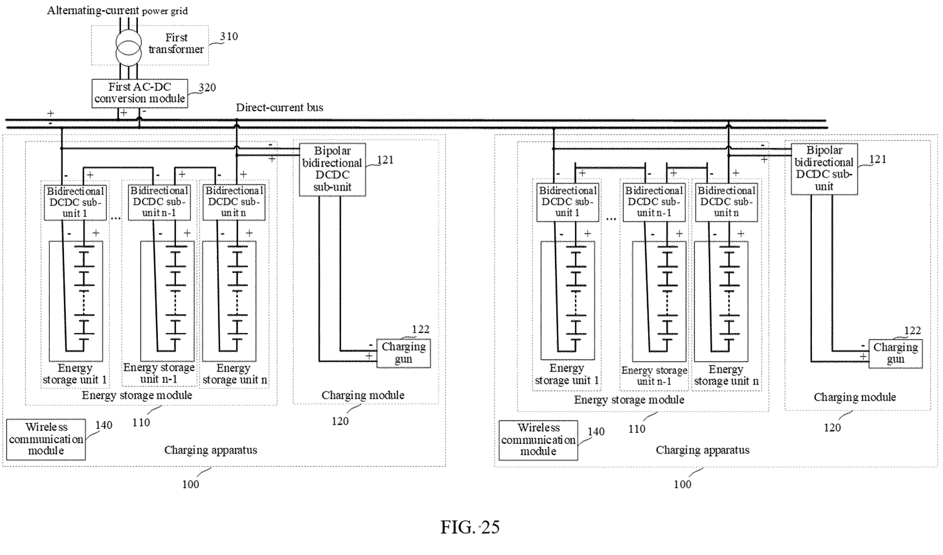

For example, referring to FIG. 25, the charging and storage system 300 includes a plurality of charging apparatuses 100, the first transformer 310, and the first AC-DC conversion module 320. The alternating-current power grid is connected to the direct-current bus through the first transformer 310 and the first AC-DC conversion module 320. The energy storage modules 110 and the charging modules 120 of the plurality of charging apparatuses 100 are all connected to the direct-current bus, so that the plurality of charging apparatuses 100 share the direct-current bus. The first AC-DC conversion module 320 may be a unidirectional ACDC sub-unit or a bidirectional ACDC sub-unit.

It should be noted that for the relevant descriptions of the example shown in FIG. 25, refer to the relevant descriptions of the example shown in FIG. 14. Details are not repeated herein. Additionally, this is merely an exemplary description and should not be considered as a specific limitation to this application.

In some embodiments, under the condition that the plurality of charging apparatuses 100 share one direct-current bus and the input module 130 of the charging apparatus 100 includes a second power conversion sub-unit 131, the charging and storage system 300 further includes: a first transformer 310, where a primary winding of the first transformer 310 is connected to an alternating-current power grid, the second power conversion sub-unit 131 is connected to a secondary winding of the first transformer 310 and the direct-current bus, and the first transformer 310 is configured to convert a second alternating current provided by the alternating-current power grid into a first alternating current; where the second positive power supply terminals and the second negative power supply terminals of the energy storage modules 110 in the plurality of charging apparatuses 100 are all connected to the direct-current bus.

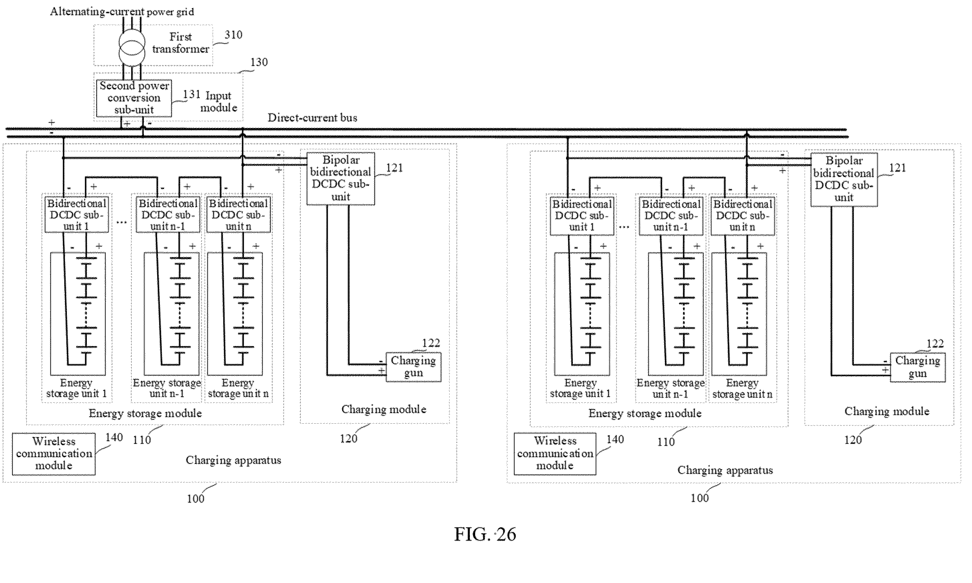

For example, referring to FIG. 26, the charging and storage system 300 includes a plurality of charging apparatuses 100 and a first transformer 310. The alternating-current power grid is connected to the second power conversion sub-unit 131 in the input module 130 of the charging apparatus 100 through the first transformer 310. The energy storage modules 110 and the charging modules 120 of the plurality of charging apparatuses 100 are all connected to the direct-current bus, so that the plurality of charging apparatuses 100 share the direct-current bus.

It should be noted that in this example, the plurality of charging apparatuses 100 share the input module 130. For the relevant descriptions of the example shown in FIG. 26, refer to the relevant descriptions of the example shown in FIG. 14. Details are not repeated herein. Additionally, this is merely an exemplary description and should not be considered as a specific limitation to this application.

In some embodiments, under the condition that the plurality of charging apparatuses 100 share one alternating-current bus and the input module 130 of the charging apparatus 100 includes a ninth power conversion sub-unit 132 or a plurality of tenth power conversion sub-units, the charging and storage system 300 further includes: a second transformer 330, where a primary winding of the second transformer 330 is connected to an alternating-current power grid, and a secondary winding of the second transformer 330 is connected to the alternating-current bus, and is configured to convert a second alternating current provided by the alternating-current power grid into a first alternating current; where the ninth power conversion sub-units 132 or the plurality of tenth power conversion sub-units in the input modules 130 of the plurality of charging apparatuses 100 are all connected to the alternating-current bus.

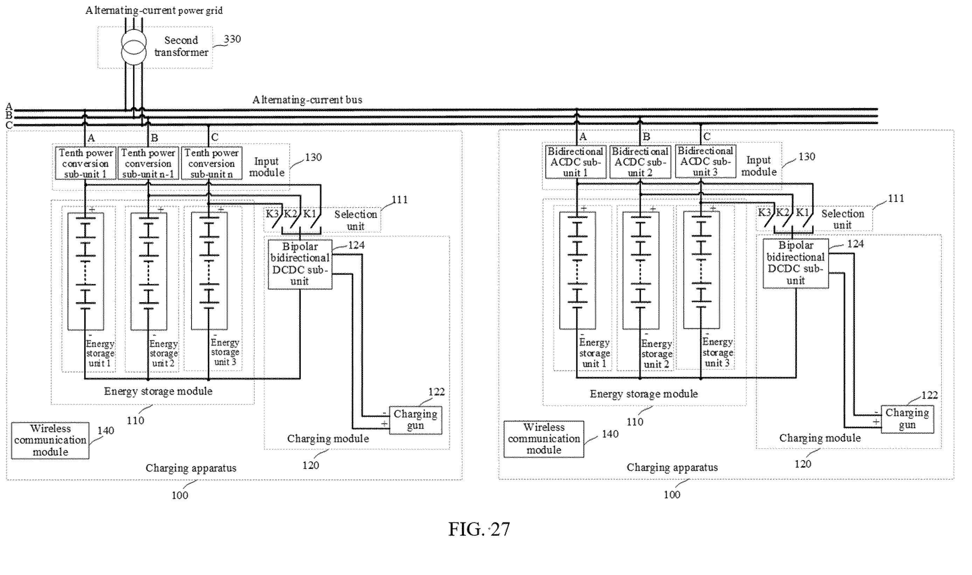

For example, referring to FIG. 27, the charging and storage system 300 includes a plurality of charging apparatuses 100 and a second transformer 330. The alternating-current power grid is connected to the alternating-current bus through the second transformer 330. The energy storage modules 110 of the plurality of charging apparatuses 100 are all connected to the alternating-current bus, so that the plurality of charging apparatuses 100 share the alternating-current bus.

It should be noted that for the relevant descriptions of the example shown in FIG. 27, refer to the relevant descriptions of the example shown in FIG. 21. Details are not repeated herein. Additionally, this is merely an exemplary description and should not be considered as a specific limitation to this application.

It should be noted that the explanations of the embodiments and beneficial effects of the charging apparatus are also applicable to the embodiments of the charging and storage system in this application. To avoid redundancy, detailed descriptions are not elaborated herein.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. However, these modifications or replacements do not make the essence of the corresponding technical solutions deviate from the scope of the technical solutions of the embodiments of this application, and they should all be included in the scope of the claims and description of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A charging apparatus, **characterized by** comprising:
an energy storage module, wherein the energy storage module comprises one or more energy storage units, each of the energy storage units has a first positive power supply terminal and a first negative power supply terminal, the one or more energy storage units are connected to a second positive power supply terminal and a second negative power supply terminal of the energy storage module via the first positive power supply terminal(s) and the first negative power supply terminal(s), and the energy storage module is configured to provide a first direct current; and
a charging module, wherein the charging module is connected to the second positive power supply terminal and the second negative power supply terminal of the energy storage module, and the charging module is configured to be adapted to provide charging output based on the first direct current, wherein maximum charging output power of the charging module is greater than or equal to 350 kilowatts, and/or rated charging output power of the charging module is greater than or equal to 290 kilowatts.

2. The charging apparatus according to claim 1, **characterized by** further comprising an input module, wherein the input module is adapted to provide charging energy for each of the energy storage units.

3. The charging apparatus according to claim 2, **characterized in that** maximum output power of the input module is less than or equal to 150 kilowatts, and/or rated output power of the input module is less than or equal to 125 kilowatts.

4. The charging apparatus according to claim 2, **characterized in that** a ratio of the maximum charging output power of the charging module to the maximum output power of the input module is greater than 1 and less than or equal to 15, and/or a ratio of the rated charging output power of the charging module to the rated output power of the input module is greater than 1 and less than or equal to 15.

5. The charging apparatus according to any one of claims 2 to 4, **characterized in that** each of the energy storage units comprises a battery sub-unit, wherein a ratio of the rated output power of the input module to rated energy of the battery sub-unit is greater than or equal to 1/n1, n1 ranging from 1 to 4.

6. The charging apparatus according to any one of claims 1 to 5, **characterized in that** each of the energy storage units comprises a battery sub-unit, wherein a ratio of rated energy of the battery sub-unit to the rated charging output power of the charging module is greater than or equal to 1/(n2×n3), n2 ranging from 94% to 99%, and n3 ranging from 4 to 6.

7. The charging apparatus according to any one of claims 1 to 6, **characterized in that** each of the energy storage units comprises a battery sub-unit, wherein a ratio of rated energy of the battery sub-unit to rated power of the battery sub-unit is less than or equal to 1/3, and/or a volumetric energy density of the battery sub-unit is greater than or equal to 380 watt-hours per liter.

8. The charging apparatus according to any one of claims 1 to 7, **characterized in that** the one or more energy storage units are connected in series and/or parallel between the second positive power supply terminal and the second negative power supply terminal of the energy storage module via the first positive power supply terminal(s) and the first negative power supply terminal(s) to provide the first direct current.

9. The charging apparatus according to claim 2, **characterized in that** each of the energy storage units comprises a battery sub-unit, and each of the energy storage units is configured to provide a second direct current based on the electric energy of the battery sub-unit.

10. The charging apparatus according to claim 9, **characterized in that** each of at least some of the one or more energy storage units further comprises a first power conversion sub-unit, wherein the first power conversion sub-unit is connected to a corresponding battery sub-unit and a first positive power supply terminal and a first negative power supply terminal of a corresponding energy storage unit, and is configured to convert the electric energy of the battery sub-unit into the second direct current; and
under the condition that the energy storage unit does not comprise the first power conversion sub-unit, the battery sub-unit is directly connected to the first positive power supply terminal and the first negative power supply terminal of the corresponding energy storage unit to provide the second direct current.

11. The charging apparatus according to claim 9, **characterized in that** each of at least some of the one or more energy storage units further comprises a first switch sub-unit, wherein the first switch sub-unit is connected to a corresponding battery sub-unit and a first positive power supply terminal and a first negative power supply terminal of a corresponding energy storage unit, and is configured to connect the corresponding battery sub-unit to the first positive power supply terminal and the first negative power supply terminal of the corresponding energy storage unit under the condition of being in an on-state, to provide the second direct current; and
under the condition that the energy storage unit does not comprise the first switch sub-unit, the battery sub-unit is directly connected to the first positive power supply terminal and the first negative power supply terminal of the corresponding energy storage unit to provide the second direct current.

12. The charging apparatus according to claim 9, **characterized in that** each of at least some of the one or more energy storage units further comprises a first power conversion sub-unit and a first switch sub-unit, wherein the first power conversion sub-unit and the first switch sub-unit are connected in series between a corresponding battery sub-unit and a first positive power supply terminal and a first negative power supply terminal of a corresponding energy storage unit, and the first power conversion sub-unit is configured to convert the electric energy of the battery sub-unit into the second direct current under the condition that a corresponding first switch sub-unit is in an on-state; and
under the condition that the energy storage unit does not comprise the first power conversion sub-unit and the first switch sub-unit, the battery sub-unit is directly connected to the first positive power supply terminal and the first negative power supply terminal of the corresponding energy storage unit to provide the second direct current.

13. The charging apparatus according to claim 10 or 12, **characterized in that** the first power conversion sub-unit is a bidirectional DCDC sub-unit.

14. The charging apparatus according to any one of claims 2 to 5 and 9 to 13, **characterized in that** the input module comprises an input interface, wherein the input interface is connected to the second positive power supply terminal and the second negative power supply terminal of the energy storage module, and is configured to provide charging energy for each of the energy storage units based on a third direct current provided by a first external power supply; or
the input module comprises a second power conversion sub-unit, wherein the second power conversion sub-unit is connected to the second positive power supply terminal and the second negative power supply terminal of the energy storage module, and is configured to provide charging energy for each of the energy storage units based on a first alternating current provided by a second external power supply.

15. The charging apparatus according to claim 14, **characterized in that** the second power conversion sub-unit is a bidirectional ACDC sub-unit.

16. The charging apparatus according to claim 14, **characterized in that** the charging module comprises a third power conversion sub-unit and a charging gun, wherein a positive input terminal and a negative input terminal of the third power conversion sub-unit are correspondingly connected to the second positive power supply terminal and the second negative power supply terminal of the energy storage module, a positive output terminal and a negative output terminal of the third power conversion sub-unit are correspondingly connected to a positive input terminal and a negative input terminal of the charging gun, and the third power conversion sub-unit is configured to convert the first direct current into a fourth direct current for charging output through the charging gun.

17. The charging apparatus according to claim 16, **characterized in that** the third power conversion sub-unit is a bipolar bidirectional DCDC sub-unit.

18. The charging apparatus according to claim 14, **characterized in that** the charging module comprises a fourth power conversion sub-unit and a charging gun, wherein a positive input terminal of the fourth power conversion sub-unit is connected to the second positive power supply terminal of the energy storage module, a positive output terminal of the fourth power conversion sub-unit is connected to a positive input terminal of the charging gun, a negative input terminal of the charging gun is connected to the second negative power supply terminal of the energy storage module, and the fourth power conversion sub-unit is configured to convert the first direct current into a fourth direct current for charging output through the charging gun.

19. The charging apparatus according to claim 18, **characterized in that** the fourth power conversion sub-unit is a unipolar bidirectional DCDC sub-unit.

20. The charging apparatus according to any one of claims 2 to 5 and 9 to 13, **characterized in that** the energy storage module further comprises a selection unit, wherein the selection unit is connected to the one or more energy storage units, and is configured to select at least one energy storage unit from the one or more energy storage units to be connected to the second positive power supply terminal and the second negative power supply terminal of the energy storage module to provide the first direct current.

21. The charging apparatus according to claim 20, **characterized in that** the energy storage module comprises one second positive power supply terminal and one second negative power supply terminal, the selection unit comprises a plurality of second switch sub-units, each of the second switch sub-units is connected to one energy storage unit, each of the second switch sub-units is connected in series between a first positive power supply terminal of a corresponding energy storage unit and the second positive power supply terminal of the energy storage module, the first negative power supply terminal(s) of the one or more energy storage units is(are) connected to the second negative power supply terminal of the energy storage module, and the second switch sub-unit is configured to connect the first positive power supply terminal of the corresponding energy storage unit to the second positive power supply terminal of the energy storage module under the condition of being in an on-state.

22. The charging apparatus according to claim 21, **characterized in that** the charging module comprises a fifth power conversion sub-unit and a charging gun, wherein a positive input terminal and a negative input terminal of the fifth power conversion sub-unit are correspondingly connected to the second positive power supply terminal and the second negative power supply terminal of the energy storage module, a positive output terminal and a negative output terminal of the fifth power conversion sub-unit are correspondingly connected to a positive input terminal and a negative input terminal of the charging gun, and the fifth power conversion sub-unit is configured to convert the first direct current into a fourth direct current for charging output through the charging gun.

23. The charging apparatus according to claim 22, **characterized in that** the fifth power conversion sub-unit is a bipolar bidirectional DCDC sub-unit.

24. The charging apparatus according to claim 21, **characterized in that** the charging module comprises a sixth power conversion sub-unit and a charging gun, wherein a positive input terminal of the sixth power conversion sub-unit is connected to the second positive power supply terminal of the energy storage module, a positive output terminal of the sixth power conversion sub-unit is connected to a positive input terminal of the charging gun, a negative input terminal of the charging gun is connected to the second negative power supply terminal of the energy storage module, and the sixth power conversion sub-unit is configured to convert the first direct current into a fourth direct current for charging output through the charging gun.

25. The charging apparatus according to claim 24, **characterized in that** the sixth power conversion sub-unit is a unipolar bidirectional DCDC sub-unit.

26. The charging apparatus according to claim 20, **characterized in that** the energy storage module comprises a plurality of second positive power supply terminals, the energy storage module comprises one second negative power supply terminal, the selection unit comprises a plurality of second switch sub-units, each of the second switch sub-units is connected to one energy storage unit and one second positive power supply terminal, each of the second switch sub-units is connected in series between a first positive power supply terminal of a corresponding energy storage unit and a corresponding second positive power supply terminal, the first negative power supply terminal(s) of the one or more energy storage units is(are) connected to the second negative power supply terminal of the energy storage module, and the second switch sub-unit is configured to connect the first positive power supply terminal of the corresponding energy storage unit to the corresponding second positive power supply terminal under the condition of being in an on-state.

27. The charging apparatus according to claim 26, **characterized in that** the charging module comprises a plurality of seventh power conversion sub-units and a charging gun, wherein a positive input terminal and a negative input terminal of each of the seventh power conversion sub-units are correspondingly connected to one second positive power supply terminals and the second negative power supply terminal, a positive output terminal and a negative output terminal of each of the seventh power conversion sub-units are correspondingly connected to a positive input terminal and a negative input terminal of the charging gun, and the plurality of seventh power conversion sub-units are configured to convert the first direct current into a fourth direct current for charging output through the charging gun.

28. The charging apparatus according to claim 27, **characterized in that** the seventh power conversion sub-unit is a bipolar bidirectional DCDC sub-unit.

29. The charging apparatus according to claim 26, **characterized in that** the charging module comprises a plurality of eighth power conversion sub-units and a charging gun, wherein a positive input terminal of each of the eighth power conversion sub-units is connected to the second positive power supply terminal, a positive output terminal of each of the eighth power conversion sub-units is connected to a positive input terminal of the charging gun, a negative input terminal of the charging gun is connected to the second negative power supply terminal of the energy storage module, and the plurality of eighth power conversion sub-units are configured to convert the first direct current into a fourth direct current for charging output through the charging gun.

30. The charging apparatus according to claim 29, **characterized in that** the eighth power conversion sub-unit is a unipolar bidirectional DCDC sub-unit.

31. The charging apparatus according to claim 20, **characterized in that** the input module comprises a ninth power conversion sub-unit, wherein the ninth power conversion sub-unit is connected to the one or more energy storage units, and is configured to provide charging energy for each of the energy storage units based on a first alternating current provided by a second external power supply.

32. The charging apparatus according to claim 31, **characterized in that** the second external power supply is a triphase alternating current power supply, the ninth power conversion sub-unit is a bidirectional triphase ACDC sub-unit.

33. The charging apparatus according to claim 20, **characterized in that** the input module comprises a plurality of tenth power conversion sub-units, each of the tenth power conversion sub-units is connected to one energy storage unit, and the plurality of tenth power conversion sub-units are configured to provide charging energy for each of the energy storage units based on a first alternating current provided by a second external power supply.

34. The charging apparatus according to claim 33, **characterized in that** the second external power supply is a triphase alternating current power supply, the number of the tenth power conversion sub-units is three, and each of the tenth power conversion sub-units is a bidirectional uniphase ACDC sub-unit.

35. The charging apparatus according to any one of claims 2 to 5 and 9 to 34, **characterized in that** the apparatus further comprises a wireless communication module, wherein at least some of the energy storage module, the input module, and the charging module are connected to the wireless communication module to perform information exchange with an external device through the wireless communication module.

36. A charging pile, **characterized by** comprising the charging apparatus according to any one of claims 1 to 35.

37. A charging and storage system, **characterized by** comprising the charging apparatus according to any one of claims 1 to 35.

38. The charging and storage system according to claim 37, **characterized in that** the charging apparatus is provided in plurality, and the plurality of charging apparatuses share one direct-current bus or alternating-current bus.

39. The charging and storage system according to claim 38, **characterized in that** when the plurality of charging apparatuses share the one direct-current bus and an input module of the charging apparatus comprises an input interface, the system further comprises:
a first transformer, wherein a primary winding of the first transformer is connected to an alternating-current power grid and is configured to convert a second alternating current provided by the alternating-current power grid into a first alternating current; and
a first AC-DC conversion module, wherein the first AC-DC conversion module is connected to a secondary winding of the first transformer and the direct-current bus, and is configured to convert the first alternating current into a third direct current; wherein
second positive power supply terminals and second negative power supply terminals of energy storage modules in the plurality of charging apparatuses are all connected to the direct-current bus.

40. The charging and storage system according to claim 38, **characterized in that** when the plurality of charging apparatuses share the one direct-current bus and an input module of the charging apparatus comprises a second power conversion sub-unit, the system further comprises:
a first transformer, wherein a primary winding of the first transformer is connected to an alternating-current power grid, the second power conversion sub-unit is connected to a secondary winding of the first transformer and the direct-current bus, and the first transformer is configured to convert a second alternating current provided by the alternating-current power grid into a first alternating current; wherein
second positive power supply terminals and second negative power supply terminals of energy storage modules in the plurality of charging apparatuses are all connected to the direct-current bus.

41. The charging and storage system according to claim 38, **characterized in that** when the plurality of charging apparatuses share the one alternating-current bus and an input module of the charging apparatus comprises a ninth power conversion sub-unit or a plurality of tenth power conversion sub-units, the system further comprises:
a second transformer, wherein a primary winding of the second transformer is connected to an alternating-current power grid, a secondary winding of the second transformer is connected to the alternating-current bus, and is configured to convert a second alternating current provided by the alternating-current power grid into a first alternating current; wherein
the ninth power conversion sub-units or the plurality of tenth power conversion sub-units in the input modules of the plurality of charging apparatuses are all connected to the alternating-current bus.
